# EUROPEAN PATENT APPLICATION

(11) **EP 2 579 386 A1**
(43) Date of publication of application: **10.04.2013**
(21) Application number: 11786577.4
(22) Date of filing: 17.05.2011
(51) Int. Cl.: H01M 14/00, H01L 31/04

(54) **PHOTOELECTRIC CONVERSION DEVICE AND METHOD FOR MANUFACTURING SAME**

(30) Priority: 24.05.2010 JP 2010117900
(71) Applicant: Sony Corporation, Tokyo 108-0075 (JP)
(72) Inventor: MUROYAMA Masakazu, Tokyo 108-0075 (JP); FUKUSHIMA Kazuaki, Tokyo 108-0075 (JP)
(74) Representative: Horner, David Richard
(86) International application number: PCT/JP2011/061705
(87) International publication number: WO 2011/148878

(57) **Abstract**

To provide a photoelectric conversion device having high conversion efficiency and a method for manufacturing the same. The photoelectric conversion device includes a working electrode that has a transparent electrode (2) and a porous metal oxide semiconductor layer (3) that is formed on a surface of the transparent electrode (2) and supported with a dye; a counter electrode (5); and an electrolyte layer (4), the hydroxyl group concentration on the surface of the oxide semiconductor layer is 0.01 groups/(nm)² or more and 4.0 groups/(nm)² or less, and the adsorbed water concentration on the surface thereof is 0.03 pieces/(nm)² or more and 4.0 pieces/(nm)² or less. The method for manufacturing a photoelectric conversion device includes a first step of forming a porous metal oxide semiconductor layer (3) on a surface of a transparent electrode (2), a second step of controlling the hydroxyl group concentration on the surface of the oxide semiconductor layer to be 0.01 groups/(nm)² or more and 4.0 groups/(nm)² or less and the adsorbed water concentration on the surface to be 0.03 pieces/nm² or more and 4.0 pieces/(nm)² or less by low temperature plasma processing under an oxidizing atmosphere, and a third step of supporting a dye in the oxide semiconductor layer.

## Description

### TECHNICAL FIELD

The present invention relates to a photoelectric conversion device having high conversion efficiency, and a method for manufacturing the same.

### BACKGROUND ART

From the viewpoint of effective utilization of resources or protection against environmental contamination, a solar cell for directly converting sunlight into electrical energy has received much attention in recent years and various researches and developments of the solar cell are under progress.

Most of the solar cells use crystalline silicon or amorphous silicon as a material for photoelectric conversion. The photoelectric conversion efficiency to represent the property of converting light energy of sunlight into electrical energy is higher in a crystalline silicon solar cell compared to an amorphous silicon solar cell. As such, the crystalline silicon solar cell has been conventionally used more often as a solar cell. However, since the crystalline silicon solar cell required lots of energy and time for growing silicon crystals, it has low productivity and high cost.

As compared with a crystalline silicon solar cell, the amorphous silicon solar cell is advantageous in that it can absorb and use light with a broader wavelength range, a substrate made of various raw materials can be selected, and a cell with a large area can be easily prepared. Further, without need for crystallization, it can be produced at low cost with favorable productivity compared to a crystalline silicon solar cell. However, the photoelectric conversion efficiency is lower than that of a crystalline silicon solar cell.

In addition to a solar cell in which crystalline silicon or amorphous silicon is used, there is a dye sensitization solar cell which uses an electrode composed of a porous metal oxide semiconductor loaded with a dye. As compared with a silicon solar cell, the dye sensitization solar cell is advantageous in that the raw materials required for manufacturing the cell are less limited in terms of resources, and the cell can be manufactured by a printing system or a flow production system, without need for a vacuum equipment and, hence, has low manufacturing cost and equipment cost.

A common dye sensitization solar cell includes a working electrode composed of a porous metal oxide semiconductor layer formed on a surface of a transparent conductor layer and loaded with a dye and a counter electrode composed of a transparent or opaque conductor layer and/or a catalyst layer and has a configuration in which the working electrode and counter electrode are arranged to face each other while an electrolyte layer is disposed between them. As a porous metal oxide semiconductor layer, titanium oxide is used. As a dye, a sensitizing dye like ruthenium complex is used. In addition, as an electrolyte layer, an electrolyte containing iodine as a major component is used.

As for the porous metal oxide semiconductor layer in a dye sensitization solar cell, for example, a porous titanium oxide layer, dispersion paste of titanium oxide particles is generally prepared, coated on the surface of a transparent conductor layer, and dried followed by calcination at 350°C to 450°C under the purpose of enhancing binding state among the particles and improving electron diffusion property (see, Patent Document 1 to be described below, for example).

As for the dye sensitization solar cell in which a resin (polymer) is used as a base, it has been tried to form a porous titanium oxide layer by calcination at a low temperature at which the resin (polymer) is not melt (see, Non-Patent Document 1 to be described below, for example). In addition, with regard to a method of producing a porous metal oxide semiconductor layer in a dye sensitization solar cell which uses a resin (polymer) as a base, a method of pressing a metal oxide particle layer is known as a method of preparing a porous metal oxide semiconductor layer (see, Non-Patent Document 2 and Patent Document 2).

In addition, a surface modification method based on plasma treatment of a porous titanium dioxide layer is known (see, Patent Document 1 and Patent Document 3 to be described below, for example).

In addition, since amount of adsorbed water and amount of hydroxyl group on a surface of an oxide semiconductor can be calculated by measuring pressure change due to chemical species desorbed from the surface of an oxide semiconductor or amount change of desorbed chemical species in accordance with increasing the temperature on a solid surface at constant rate and analyzing the adsorbed chemical species, and also adsorption amount, adsorption state on the surface, or desorption process from the surface, it is established as a thermal desorption analysis (see, Non-Patent Document 3 to be described below, for example).

### CITATION LIST

### PATENT DOCUMENTS

Patent Document 1: Japanese Patent Application Laid-Open No. 2006-310134 (paragraphs 0017 to 0028)
Patent Document 2: WO 00/72373 (claim 1)
Patent Document 3: Japanese Patent Application Laid-Open No. 2004-247104 (paragraphs 0015 to 0019)

### NON-PATENT DOCUMENTS

Non-Patent Document 1: UCHIDA Satoshi, SEGAWA Hiroshi, "Film type dye sensitization solar cell as flexible device", Functional Materials, Vol. 29, No. 10, 29-35 (20009) (3. Stability of titanium oxide electrode used for film type dye sensitization solar cell, 4. Microwave calcination technique for titanium oxide electrode).
Non-Patent Document 2: H. Lindstron et al., "A New Method for Manufacturing Nanostructured Electrodes on Plastic Substrates", Nano lett., Vol. 1, No. 2, 97-100 (2001)(Experimental Section, Result and Discussion)
Non-Patent Document 3: HIRASHITA Norio, UCHIYAMA, Taizou, "Quantitative analysis of gas released from materials for semiconductor integrated circuit measured by thermal gas desorption analysis", Analytical Chemistry, 43, 757 (1994).

### SUMMARY OF THE INVENTION

### PROBLEMS TO BE SOLVED BY THE INVENTION

According to Patent Document 1, a calcination process at a high temperature of from 350°C to 450°C is adopted under the purpose of enhancing binding state among the particles in a porous metal oxide semiconductor layer and improving electron diffusion property. Thus, a usable base is limited to those made of materials with high heat resistance, for example, glass, and therefore production cost like raw material cost for a base used for a dye sensitization solar cell or cost of energy consumed for manufacturing the solar cell is quite high.

In addition, according to Non-Patent Document 1, for a dye sensitization solar cell in which a resin (polymer) is used as a base, it is tried to form a porous titanium oxide layer by calcination at a low temperature at which the resin (polymer) is not melt. However, the conversion efficiency is low, the porous titanium oxide layer formed by the low temperature calcination is easily broken, and durability of a cell in which the porous titanium oxide layer is used is poor. There are also problems in that the calcination time is relatively long for the low temperature calcination and thus it is disadvantageous as a process for large scale production.

In addition, according to a method of producing a porous metal oxide semiconductor layer by pressing the metal oxide particle layer as described in Non-Patent Document 2 and Patent Document 2, high pressure like several hundred kgf/cm² needs to be used just for pressure treatment. Thus, a hydraulic device with high pressure is required. Further, from the viewpoint that the roll used for delivery of pressure in a continuous production device like roll to roll is easily worn out or broken and the processing speed is slow, it is an inappropriate method for continuous production.

For forming a porous metal oxide semiconductor layer to constitute a dye sensitization solar cell, a calcination treatment at a high temperature is required. A base and a transparent electrode consisting of a transparent conductor layer, which are used for the cell, are also required to have heat resistance. In this regard, since a common transparent electrode like ITO has no heat resistance, it is necessary to use fluorine-doped tin oxide, which is a transparent electrode with particularly excellent heat resistance. However, the fluorine-doped tin oxide has poor conductivity and is inappropriate for use in a solar cell or the like which requires a large area.

Further, to enhance the photoelectric conversion efficiency of a dye sensitization solar cell, it is important to improve characteristics of a porous metal oxide semiconductor layer. Accordingly, improvements like increasing the dye adsorption amount on a porous metal oxide semiconductor layer, inhibiting reverse electron process from a porous metal oxide semiconductor layer, and increasing the intraparticle or interparticle electron diffusion property of the oxide particles of a porous metal oxide semiconductor layer are required.

Further, although Patent Document 1 discloses that the dye adsorption amount is increased by increasing a concentration of a hydroxyl group on the surface by plasma treatment of a titanium dioxide layer and Patent Document 3 discloses that the conversion efficiency is improved by plasma treatment of a titanium dioxide layer, no description is given with regard to the concentration of hydroxyl group on the surface and a concentration of adsorbed water on a titanium dioxide layer.

### SOLUTIONS TO PROBLEMS

The present invention is devised to solve the problems described above, and an object of the invention is to provide a photoelectric conversion device having high conversion efficiency and a method for manufacturing the device.

Specifically, the invention is directed to a photoelectric conversion device having a working electrode on which a porous metal oxide semiconductor layer is formed to support a dye (for example, the transparent electrode 2 of the embodiments that are given below), in which the concentration of the hydroxyl group on the surface of the porous metal oxide semiconductor layer is from 0.01 groups/(nm)² to 4.0 groups/(nm)².

The invention is also directed to a method for manufacturing a photoelectric conversion device which includes: a first step in which a porous metal oxide semiconductor layer is formed on a surface of a working electrode (for example, the transparent electrode 2 of the embodiments that are given below); a second step in which the concentration of the hydroxyl group on the surface of the porous metal oxide semiconductor layer is controlled to be from 0.01 groups/(nm)² to 4.0 groups/(nm)²; and a third step in which the porous metal oxide semiconductor layer is caused to support a dye.

### EFFECTS OF THE INVENTION

According to the invention, there is a working electrode on which a porous metal oxide semiconductor layer is formed to support a dye (for example, the transparent electrode 2 of the embodiments that are given below) and the concentration of the hydroxyl group on the surface of the porous metal oxide semiconductor layer is from 0.01 groups/(nm)² to 4.0 groups/(nm)², and thus it is possible to provide a photoelectric conversion device which has higher conversion efficiency than a photoelectric conversion device having the porous metal oxide semiconductor layer that is formed by coating and calcination of a solution containing dispersion of metal oxide semiconductor particles.

Further, according to the invention, since there are a first step in which a porous metal oxide semiconductor layer is formed on a surface of a working electrode, a second step in which the hydroxyl group concentration of the hydroxyl group on the surface of the porous metal oxide semiconductor layer is controlled to be from 0.01 groups/(nm)² to 4.0 groups/(nm)², and a third step in which the porous metal oxide semiconductor layer is caused to support a dye, it is possible to provide a method for manufacturing a photoelectric conversion device which has higher conversion efficiency than a method for manufacturing a photoelectric conversion device which has a step of forming the porous metal oxide semiconductor layer by coating and calcination of a solution containing dispersion of metal oxide semiconductor particles.

### BRIEF DESCRIPTION OF DRAWINGS

Fig. 1 is a diagram for explaining a configuration of a dye sensitization photoelectric conversion device according to an embodiment of the invention.
Fig. 2 is a diagram for explaining (A) a process of forming a window electrode (working electrode) and (B) a process of forming a counter electrode according to a method for manufacturing the dye sensitization photoelectric conversion device as described above.
Fig. 3 is a diagram for explaining the relation between concentrations of a hydroxyl group and adsorbed water and the photoelectric conversion efficiency in a titanium dioxide layer which is used for a dye sensitization photoelectric solar cell of the examples of the invention.
Fig. 4 is a diagram for explaining (A) the relation between the concentrations of the hydroxyl group and the photoelectric conversion efficiency, and (B) the relation between the concentration of adsorbed water and the photoelectric conversion efficiency in the titanium dioxide layer as described above.
Fig. 5 is a diagram for explaining the relation between the concentrations of the hydroxyl group and adsorbed water and the photoelectric conversion efficiency in the titanium dioxide layer as described above.
Fig. 6 is a diagram for explaining the relation between the concentration of the hydroxyl group and the concentration of adsorbed water in the titanium dioxide layer as described above.
Fig. 7 is a diagram for explaining (A) the relation among an RF output, the photoelectric conversion efficiency, the concentration of the hydroxyl group, and the concentration of adsorbed water and (B) the relation among the RF output, the concentration of the hydroxyl group, and the concentration of adsorbed water according to plasma treatment of the titanium dioxide layer as described above.
Fig. 8 is a diagram for explaining (A) adsorption of the hydroxyl group on a surface of the titanium dioxide layer as described above, and (B) adsorption of the hydroxyl group and water molecules on the surface of the titanium dioxide layer as described above.
Fig. 9 is a diagram for explaining an example of the thermal desorption spectrum as described above.

### MODE FOR CARRYING OUT THE INVENTION

The photoelectric conversion device of the invention preferably has a configuration that the concentration of the hydroxyl group is from 0.01 groups/(nm)² to 3.0 groups/(nm)². According to such a configuration, a photoelectric conversion device having the photoelectric conversion efficiency of 3% or more can be provided.

It is more preferable to have a configuration that the concentration of the hydroxyl group is from 0.02 groups/(nm)² to 2.0 groups/(nm)². According to such a configuration, a photoelectric conversion device having the photoelectric conversion efficiency of 5% or more can be provided.

It is still more preferable to have a configuration that the concentration of the hydroxyl group is from 0.05 groups/(nm)² to 0.9 groups/(nm)². According to such a configuration, a photoelectric conversion device having the photoelectric conversion efficiency of 7% or more can be provided.

Further, it is preferable to have a configuration that the concentration of the adsorbed water on the surface of the porous metal oxide semiconductor layer is from 0.03 pieces/(nm)² to 4.0 pieces/(nm)². According to such a configuration, it is possible to provide a photoelectric conversion device which has higher conversion efficiency than a photoelectric conversion device having the porous metal oxide semiconductor layer that is formed by coating and calcination of a solution containing dispersion of metal oxide semiconductor particles.

It is more preferable to have a configuration that the concentration of the adsorbed water is from 0.03 pieces/(nm)² to 3.5 pieces/(nm)². According to such a configuration, a photoelectric conversion device having the photoelectric conversion efficiency of 3% or more can be provided.

It is still more preferable to have a configuration that the concentration of the adsorbed water is from 0.07 pieces/(nm)² to 2.5 pieces/(nm)². According to such a configuration, a photoelectric conversion device having the photoelectric conversion efficiency of 5% or more can be provided.

It is even still more preferable to have a configuration that the concentration of the adsorbed water is from 0.2 pieces/(nm)² to 2.0 pieces/(nm)². According to such a configuration, a photoelectric conversion device having the photoelectric conversion efficiency of 7% or more can be provided.

As for the method for manufacturing a photoelectric conversion device of the invention, it is preferable to have configuration that the concentration of the hydroxyl group is controlled to be from 0.01 groups/(nm)² to 3.0 groups/(nm)². According to such a configuration, a method for manufacturing a photoelectric conversion device having the photoelectric conversion efficiency of 3% or more can be provided.

It is more preferable to have a configuration that the concentration of the hydroxyl group is controlled to be from 0.02 groups/(nm)² to 2.0 groups/(nm)². According to such a configuration, a method for manufacturing a photoelectric conversion device having the photoelectric conversion efficiency of 5% or more can be provided.

It is still more preferable to have a configuration that the concentration of the hydroxyl group is controlled to be from 0.05 groups/(nm)² to 0.9 groups/(nm)². According to such a configuration, a method for manufacturing a photoelectric conversion device having the photoelectric conversion efficiency of 7% or more can be provided.

Further, for the second step described above, it is preferable to have a configuration that the concentration of the adsorbed water on the surface of the porous metal oxide semiconductor layer is controlled to be from 0.05 pieces/(nm)² to 4.0 pieces/(nm)². According to such a configuration, it is possible to provide a method for manufacturing a photoelectric conversion device which has higher conversion efficiency than a photoelectric conversion device having the porous metal oxide semiconductor layer that is formed by coating and calcination of a solution containing dispersion of metal oxide semiconductor particles.

It is more preferable to have a configuration that the concentration of the adsorbed water is controlled to be from 0.03 pieces/(nm)² to 3.5 pieces/(nm)². According to such a configuration, a method for manufacturing a photoelectric conversion device having the photoelectric conversion efficiency of 3% or more can be provided.

It is still more preferable to have a configuration that the concentration of the adsorbed water is controlled to be from 0.07 pieces/(nm)² to 2.5 pieces/(nm)². According to such a configuration, a method for manufacturing a photoelectric conversion device having the photoelectric conversion efficiency of 5% or more can be provided.

It is even still more preferable to have a configuration that the concentration of the adsorbed water is controlled to be from 0.2 pieces/(nm)² to 2.0 pieces/(nm)². According to such a configuration, a method for manufacturing a photoelectric conversion device having the photoelectric conversion efficiency of 7% or more can be provided.

Regarding the second step described above, it is also preferable to have a configuration that the concentration of the hydroxyl group is controlled by performing at least one of a plasma treatment, a UV irradiation treatment, and a heat treatment of the surface of the porous metal oxide semiconductor layer. According to such a configuration, it is possible to provide a method for manufacturing a photoelectric conversion device which has higher conversion efficiency than a photoelectric conversion device having the porous metal oxide semiconductor layer that is formed by coating and calcination of a solution containing dispersion of metal oxide semiconductor particles.

Further, it is preferable to have a configuration that the plasma treatment is carried out under oxidizing atmosphere. According to such a configuration, it is possible to provide a method for manufacturing a photoelectric conversion device which has higher conversion efficiency than a photoelectric conversion device having the porous metal oxide semiconductor layer that is formed by coating and calcination of a solution containing dispersion of metal oxide semiconductor particles.

Further, it is preferable to have a constitution that the plasma treatment is carried out by using any one of parallel plate plasma, barrel plasma, microwave plasma, ECR plasma, helicon wave plasma, hollow cathode discharge plasma, surface wave plasma, and arc jet plasma. According to such constitution, it is possible to provide a method for manufacturing a photoelectric conversion device which has higher conversion efficiency than a photoelectric conversion device having a porous metal oxide semiconductor layer that is formed by coating and calcination of a solution containing dispersion of metal oxide semiconductor particles.

Further, for the photoelectric conversion device and the method for manufacturing the same according to the invention, it is preferable to have a constitution that the ratio α, which is defined with the concentration of hydroxyl group and the concentration of adsorbed water, i.e., concentration of hydroxyl group (groups/(nm)²)/{ concentration of hydroxyl group (groups/(nm)²) + concentration of adsorbed water (pieces/(nm)²)}, is 0.11 or more and 0.45 or less. According to such constitution, it is possible to provide a photoelectric conversion device which has the photoelectric conversion efficiency of 3% or more and a method for manufacturing the same.

Further, it is preferable to have a constitution that the ratio α is 0.11 or more and 0.40 or less. According to such constitution, it is possible to provide a photoelectric conversion device which has the photoelectric conversion efficiency of 5% or more and a method for manufacturing the same.

Further, it is preferable to have a constitution that the ratio α is 0.11 or more and 0.35 or less. According to such constitution, it is possible to provide a photoelectric conversion device which has the photoelectric conversion efficiency of 7% or more and a method for manufacturing the same.

Further, regarding the second step described above, it is preferable to have a constitution that, by controlling the concentration of hydroxyl group by performing a plasma treatment of the surface of the porous metal oxide semiconductor layer, the plasma power (RF output) for the plasma treatment is 100 W or more and 700 W or less. According to such constitution, it is possible to provide a photoelectric conversion device which has the photoelectric conversion efficiency of 3% or more and a method for manufacturing the same.

Further, regarding the second step described above, it is preferable to have a constitution that, by controlling the concentration of hydroxyl group by performing a plasma treatment of the surface of the porous metal oxide semiconductor layer, the plasma power (RF output) for the plasma treatment is 180 W or more and 660 W or less. According to such constitution, it is possible to provide a photoelectric conversion device which has the photoelectric conversion efficiency of 5% or more and a method for manufacturing the same.

Further, regarding the second step described above, it is preferable to have a constitution that, by controlling the concentration of hydroxyl group by performing a plasma treatment of the surface of the porous metal oxide semiconductor layer, the plasma power (RF output) for the plasma treatment is 300 W or more and 580 W or less. According to such constitution, it is possible to provide a photoelectric conversion device which has the photoelectric conversion efficiency of 7% or more and a method for manufacturing the same.

Further, regarding the photoelectric conversion device and method for manufacturing the same according to the invention, it is preferable to have a constitution that the metal oxide semiconductor particles consist of at least one particle of titanium, zinc, tin, and niobium oxide. According to such constitution, it is possible to provide a photoelectric conversion device which has a high photoelectric conversion efficiency and a method for manufacturing the same.

Further, the metal oxide semiconductor particles are titanium dioxide particles of brookite type or anatase type. According to such constitution, it is possible to provide a photoelectric conversion device which has a high photoelectric conversion efficiency and a method for manufacturing the same.

Further, it is preferable to have a constitution that average primary particle diameter of the metal oxide semiconductor particles is 5 nm or more and 500 nm or less. According to such constitution, it is possible to provide a photoelectric conversion device which has a high photoelectric conversion efficiency and a method for manufacturing the same.

Regarding the power generation characteristics of a dye sensitization solar cell, it is very important to control the amount of photosensitizing dye supported on a porous metal oxide semiconductor layer for maximum use of energy caused by light illumination. The most important factor affecting the adsorption amount of a photosensitizing dye is an amount of hydroxyl group or an amount of adsorbed water on a surface of the porous metal oxide semiconductor layer.

Kinetic energy of a gas molecule is in much lower state than that of an electron. As such, by forming low temperature plasma having a thermally non-equilibrium state in which the electron temperature is much higher than the gas temperature so that temperature of overall system is relatively low, oxygen atom is efficiently dissociated into an elemental nucleus (i.e., ion or neutral radical) and electrons under oxidizing gas atmosphere at low pressure, and it can stably form oxidizing species in a low temperature region.

Under oxidizing gas atmosphere at reduced pressure, according to a treatment including generating low temperature plasma and exposing a porous metal oxide semiconductor layer to the low temperature plasma (i.e., low temperature plasma treatment), it is possible to have evaporation or dehydration condensation of adsorbed water on a surface of the porous metal oxide semiconductor layer and to control the concentrations of moisture and hydroxyl group on a surface within a short time by using a simple method.

On the other hand, when the porous metal oxide semiconductor layer is heated under normal atmosphere, from the viewpoint that the latent heat of water is high and energy for dehydration condensation between hydroxyl group is very high, it is very difficult to control the concentrations of moisture and hydroxyl group on a surface of the porous metal oxide semiconductor layer.

In this regard, according to the invention, the porous metal oxide semiconductor layer is subjected to low temperature plasma treatment, and therefore evaporation or dehydration condensation of adsorbed water on a surface of the porous metal oxide semiconductor layer can be conveniently achieved at low temperature like temperature below heat resistant temperature of a substrate such as a polymer resin without increasing the temperature of a substrate. As such, it can be easily applied for a dye sensitization solar cell in which a polymer resin substrate is used as a base.

Since the dye sensitization solar cell of the invention has a working electrode which consists of a porous metal oxide semiconductor layer supported with a dye, in which the hydroxyl group concentration on the surface is controlled to 0.01 groups/(nm)² to 4.0 groups/(nm)² and the adsorbed water concentration on the surface is controlled to 0.03 pieces/(nm)² to 3.5 pieces/(nm)² by a plasma treatment, a heat treatment, or a UV treatment under oxidizing gas atmosphere, it has high conversion efficiency and can be manufactured by a low temperature process based on simple methods.

Herein below, with reference to the drawings, embodiments of the invention are described in greater detail by having a dye sensitization solar cell as an example of a photoelectric conversion device which is constructed to absorb light by photosensitizing dye supported on a porous metal oxide semiconductor layer and to extract the electrons of a photosensitizing dye, which are excited by the light absorption, to outside through the porous metal oxide semiconductor layer. However, the invention can have any constitution which satisfies the activity and effect described above, and it is not limited to the embodiments. Further, the drawings given below are drawn to help clear understanding of the constitution of the invention, and the scale is not exactly accurate.

### [Embodiments]

### <Dye sensitization photoelectric conversion device>

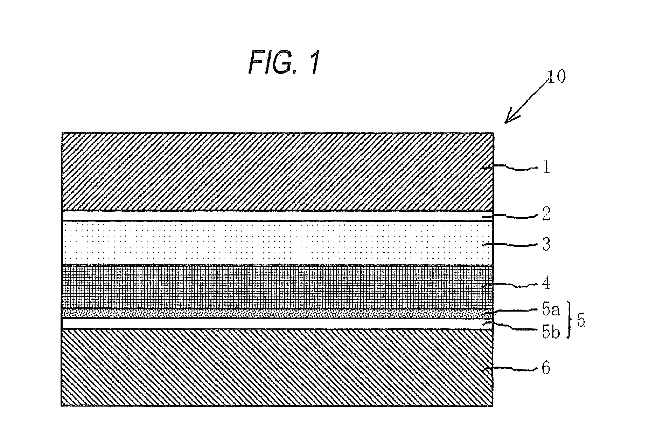

Fig. 1 is a diagram for describing a configuration of a dye sensitization photoelectric conversion device according to an embodiment of the invention.

As illustrated in Fig. 1, the dye sensitization photoelectric conversion device (dye sensitization solar cell) 10 consists of a transparent substrate 1 such as glass, the transparent electrode (negative electrode) 2 consisting of FTO (fluorine-doped tin oxide (IV) SnO₂) or the like, the porous metal oxide semiconductor layer 3 supported with a photosensitizing dye, the electrolyte layer 4, the counter electrode (positive electrode) 5, the counter substrate 6, and a sealing agent (not illustrated).

As for the porous metal oxide semiconductor layer 3, a porous layer obtained by calcining microparticles of titanium oxide TiO₂ is generally used. On surface of the microparticles which constitute the porous metal oxide semiconductor layer 3, a photosensitizing dye is supported.

The electrolyte layer 4 is filled in a gap between the porous metal oxide semiconductor layer 3 and the counter electrode 5, and an organic electrolyte liquid containing redox couple species such as I⁻/I₃⁻ is used. The counter electrode 5 consists of the platinum layer 5a and is formed on top of the counter substrate 6.

When light enters the dye sensitization photoelectric conversion device 10, the device 10 functions as a cell which has the counter electrode 5 as a positive electrode and the transparent electrode 2 as a negative electrode. Assuming that FTO is used as a material of the transparent electrode 2, N719 is used as a photosensitizing dye (not illustrated), titanium oxide TiO₂ is used as a material for the porous metal oxide semiconductor layer 3, and redox species of I⁻/I₃⁻ are used as a redox couple, and the principle of the dye sensitization photoelectric conversion device 10 is described as follows.

When photons transmitted the transparent substrate 1 and the transparent electrode 2 are absorbed by a photosensitizing dye, the electrons contained in the photosensitizing dye are excited from a ground state (HOMO) to an excited state (LUMO). The electrons in an excited state are extracted to a conduction band of the porous metal oxide semiconductor layer 3 via an electric bond between the photosensitizing dye and the porous metal oxide semiconductor layer 3, and reach the transparent electrode 2 through the porous metal oxide semiconductor layer 3.

Meanwhile, the photosensitizing dye after losing the electrons receives electrons from a reducing agent in the electrolyte layer 4, for example, from I⁻ based on the reactions 2I⁻ → I₂ + 2e⁻ and I₂ + I⁻ → I₃⁻, and produces an oxidizing agent, e.g., I₃⁻ (binding product of I₂ and I⁻), in the electrolyte layer 4. Thus, the produced oxidizing agent reaches the counter electrode 5 prepared by diffusion and, according to the reverse reaction of the above-described reaction, i.e., 1₃⁻ → I₂ + I⁻ and I₂ + 2e⁻ → 2I⁻, it receives the electrons from the counter electrode 5 and is reduced to become the original reducing agent.

The electrons transferred from the transparent electrode 2 to an external circuit complete an electric work in the external circuit and are brought back to the counter electrode 5. As a result, the photon energy is converted into the electric energy without leaving any change in the photosensitizing dye or in the electrolyte layer 4.

As a photosensitizing dye of the dye sensitization photoelectric conversion device 10, a material capable of absorbing light in visible light region, for example, a bipyridine complex, a terpyridine complex, melocyanine dye, porphyrin, and phthalocyanine, are generally used.

As a dye which is used singly, cisbis(isothiocyanato)bis(2,2'-bipyridyl-4,4'-dicarboxylic acid) ruthenium (II) 2 tetrabitylammonium complex (common name: N719), which is one kind of a bipyridine complex, is generally used as it has an excellent photosensitizing dye performance. In addition, cisbis(isothiocyanato)bis(2,2'-bipyridyl-4,4'-dicarboxylic acid) ruthenium (II) (common name: N3), which is one kind of a bipyridine complex, or tris(isothiocyanato)(2,2':6",2"-terpyridyl-4,4',4"-tricarboxylic acid) ruthenium (II) 3 tetrabitylammonium complex (common name: black dye), which is one kind of a terpyridine complex, is generally used.

In particular, when N3 or black dye is used, a co-adsorbent is also used frequently. The co-adsorbent is a molecule added for preventing association of dye molecules on the porous metal oxide semiconductor layer 3, and representative examples of the co-adsorbent include kenodeoxycholic acid, taurodeoxy cholate, and 1-decrylphosphonic acid. Those molecules have structural characteristics that a carboxyl group or a phosphono group is contained as a functional group which is easily adsorbed onto titanium oxide of the porous metal oxide semiconductor layer 3 and they are formed with a σ bond to prevent an interruption between dye molecules by existing between dye molecules.

According to the method for manufacturing the dye sensitization photoelectric conversion device (dye sensitization solar cell) of the invention, a porous metal oxide semiconductor layer is formed, the concentrations of the hydroxyl group and adsorbed water on a surface of the layer are controlled, and a dye is supported on the porous metal oxide semiconductor layer, and thus it is possible to provide a photoelectric conversion device and a method for manufacturing the same which has higher conversion efficiency than a method for manufacturing a photoelectric conversion device having a porous metal oxide semiconductor layer that is formed by coating and calcination of a solution containing dispersion of metal oxide semiconductor particles.

By controlling that, in the porous metal oxide semiconductor layer, the concentration of the hydroxyl group is 0.05 groups/(nm)² or more and 0.9 groups/(nm)² or less, the concentration of adsorbed water is 0.2 pieces/(nm)² to 2.0 pieces/(nm)², and ratio α is 0.11 or more and 0.35 or less, a dye sensitization photoelectric conversion device (dye sensitization solar cell) having the photoelectric conversion efficiency of 7% or more can be achieved. As used herein, ratio α represents "concentration of hydroxyl group/(concentration of hydroxyl group + concentration of adsorbed water)."

When a resin film is used as a base and the porous metal oxide semiconductor layer is formed on a surface of a transparent electrode formed on the base, the conversion efficiency is preferably improved by heating and calcining the porous metal oxide semiconductor layer within a range in which the base is not deteriorated. The heating within the range in which the base is not deteriorated indicates the temperature of 170°C or lower when PET is used as a base, for example. When the base is PEN, it is 200°C or lower. Heating at the temperature higher than that may cause a problem in production such as distortion of a base.

Specific examples of the metal oxide semiconductor particles that are used for forming the porous metal oxide semiconductor layer include titanium oxide, tin oxide, tungsten oxide, zinc oxide, indium oxide, niobium oxide, iron oxide, nickel oxide, cobalt oxide, strontium oxide, tantalum oxide, antimony oxide, lanthanoid oxide, yttrium oxide, and vanadium oxide. If it can form a porous metal oxide semiconductor layer after plasma treatment, has electron conductivity in a photoexcited state, and can be photoelectrically converted to a visible light and/or near infrared light region by coupling to a sensitizing dye, it is not limited to those described above.

Material of the metal oxide semiconductor particles may be a combination of plural metal oxides. For sensitization of the surface of the porous metal oxide semiconductor layer by a sensitizing dye, the conduction band of the porous metal oxide semiconductor layer is desirably located on a position at which it can easily receive electrons from the photoexcited state of a sensitizing dye. For such reasons, among the metal oxide semiconductor particles, titanium oxide, tin oxide, zinc oxide, and niobium oxide are used in particular. Further, from the viewpoint of cost and environmental hygiene, titanium oxide is used in particular. Preferably, one type of the metal oxide semiconductor particles having average particle diameter of 5 nm to 500 nm or a combination of two or more types of them can be used.

As for the transparent conductor layer, it is not particularly limited if it is a conductive material having little light absorption in visible to near infrared region of sunlight. However, metal oxides having good conductivity such as ITO (indium-tin oxide), tin oxide (including those doped with fluorine), and zinc oxide, and carbon are preferable. Under the purpose of promoting binding between the transparent electrode layer and metal oxide particle layer, improving electron transfer, or preventing the reverse electron process, it is possible to have an additional layer.

As for the transparent base, it is not particularly limited if it is a material having little light absorption in visible to near infrared region of sunlight. It is possible to use a glass base such as quartz, a blue plate, BK7, and lead glass and a resin base such as polyethylene terephthalate, polyethylene naphthalate, polyimide, polyester, polyethylene, polycarbonate, polyvinyl butyrate, polypropylene, tetraacetyl cellulose, syndiotactic polystyrene, polyphenylene sulfide, polyarylate, polysulfone, polyester sulfone, polyether imide, cyclic polyolefin, phenoxy bromide, and vinyl chloride.

The solvent used for preparing a solution which contains a sensitizing dye used for treatment to support the dye on metal oxide semiconductor particles needs to be a solvent which can dissolve the sensitizing dye and mediate the dye adsorption onto the metal oxide semiconductor particles. To dissolve the sensitizing dye, it is possible to perform heating, adding a dissolution aid, or filtering insolubles, if required.

As a solvent, a mixture of two or more types of the solvent may be used. Examples of the solvent that can be used include alcohol solvents such as ethanol, isopropyl alcohol, and benzyl alcohol, nitrile solvents such as acetonitrile and propionitrile, halogen solvents such as chloroform, dichloromethane, and chlorobenzene, ether solvents such as diethyl ether and tetrahydrofuran, ester solvents such as ethyl acetate and butyl acetate, ketone solvents such as acetone, methyl ethyl ketone, and cyclohexanone, carbonic acid ester solvents such as diethyl carbonate and propylene carbonate, hydrocarbon-based solvents such as hexane, octane, toluene and xylene, dimethyl formamide, dimethyl acetamide, dimethyl sulfoxide, 1,3-dimethyl imidazolinone, N-methyl pyrrolidone, and water, but not limited thereto. As a solvent, a mixture of two or more types of the solvent may be used.

Film thickness of the porous metal oxide semiconductor layer formed on a conductive surface of a transparent base is preferably 0.5 µm or more and 200 µm or less. If the film thickness is less than the range, effective conversion efficiency is not obtained. On the other hand, if the film thickness is thicker than the range, it is difficult to perform the production including that breaking or peeling occurs during film formation and, due to the extended distance between a surface layer of the porous metal oxide semiconductor layer and the conductive surface, generated charges may not be effectively delivered to the conductive surface, and as a result, favorable conversion efficiency is difficult to obtain.

As for the sensitizing dye, a material which can generally absorb light in visible light region, for example, a bipyridine complex, a terpyridine complex, a melocyanine dye, porphyrin, and phthalocyanine can be used.

As a dye which is used singly, cisbis(isothiocyanato)bis(2,2'-bipyridyl-4,4'-dicarboxylic acid) ruthenium (II) 2 tetrabitylammonium complex (common name: N719), which is one kind of a bipyridine complex, is generally used as it has an excellent dye performance.

Further, examples of the sensitizing dye for photoelectric conversion include azo dyes, quinacridone dyes, diketopyrrolopyrrole dyes, squarilyum dyes, cyanine dyes, mellocyanine dyes, triphenylmethane dyes, xanthene dyes, porphyrin dyes, chlorophyll dyes, ruthenium complex dyes, indigo dyes, perylyene dyes, oxazine dyes, anthraquinone dyes, phthalocyanine dyes, naphthalocyanine dyes, and a derivative thereof. However, if it can absorb light and inject excited electrons to conduction band of a porous metal oxide semiconductor layer (electrode), it is not limited to them. When one or more linking group is contained in the structure of the sensitizing dye, it can be linked to a surface of the porous metal oxide semiconductor layer so that the excited electrons of photoexcited dye can be quickly delivered to the conduction band of the porous metal oxide semiconductor layer, and therefore desirable.

The electrolyte layer preferably consists of an electrolyte, a medium, and additives. Preferred examples of the electrolyte include a mixture of I₂ and an iodine compound (e.g., LiI, NaI, KI, CsI, MgI₂, CaI₂, CuI, tetraalkyl ammonium iodide, pyridinium iodide, and imidazolium iodide) and a mixture of Br₂ and a bromine compound (e.g., LiBr). Of these, an electrolyte in which LiI, pyridinium iodide, or imidazolium iodide is mixed as a combination of I₂ and an iodine compound is preferable, but it is not limited to this type of combination.

Regarding the preferred electrolyte concentration, I₂ is 0.01 M or more and 0.5 M or less and the mixture of iodine compound is 0.1 M or more and 15 M or less in the medium.

The medium used for the electrolyte layer is preferably a compound capable of exhibiting good ion conductivity. Examples of the medium in solution state that can be used include an ether compound such as dioxane and diethyl ether, chain type ethers such as ethylene glycol dialkyl ether, propylene glycol dialkyl ether, polyethylene glycol dialkyl ether, and polypropylene glycol dialkyl ether, alcohols such as methanol, ethanol, ethylene glycol monoalkyl ether, propylene glycol monoalkyl ether, polyethylene glycol monoalkyl ether, and polypropylene glycol monoalkyl ether, polyhydric alcohols such as ethylene glycol, propylene glycol, polyethylene glycol, polypropylene glycol, and glycerin, a nitrile compound such as acetonitrile, glutaronitrile, methxoyacetonitrile, propionitrile, and benzonitrile, a carbonate compound such as ethylene carbonate and propylene carbonate, a heterocyclic compound such as 3-methyl-2-oxazolidinone, and an aprotic polar substance such as dimethyl sulfoxide and sulfolane.

A polymer may be also included under the purpose of using a solid phase medium (including gel phase). For such case, by adding a polymer such as polyacrylonitrile and polyfluorovinylidene to the solution state medium described above, a polyfunctional monomer having an ethylenically unsaturated group is polymerized in the solution state medium to turn the medium into a solid phase.

As an electrolyte, an electrolyte which does not require CuI, CuSCN medium, and a hole transport material such as 2,2',7,7'-tetrakis(N,N-di-p-methoxyphenylamine)9,9'-spirobifluorene can be used.

The counter electrode 5 functions as a positive electrode of a photoelectric conversion cell. Specifically, as a conductive material used for a counter electrode, a metal (for example, platinum, gold, silver, copper, aluminum, rhodium, indium, and the like), metal oxide (ITO (indium-tin oxide) or tin oxide (including those doped with fluorine), zinc oxide), or carbon or the like can be mentioned. Film thickness of the counter electrode is, although not specifically limited, preferably 5 nm or more and 100 µm or less.

By combining a window electrode (working electrode) and the counter electrode 5 mediated by an electrolyte layer, a photoelectric conversion cell is formed. If necessary, to avoid leakage or vaporization of an electrolyte layer, sealing is carried out on the periphery of the photoelectric conversion cell. For sealing, a thermoplastic resin, a photocurable resin, glass frit, or the like can be used as a sealing material. If necessary, the photoelectric conversion cell is produced by connecting photoelectric conversion cells with small area. By combining photoelectric conversion cells in series, the electromotive force can be increased.

### <Method for manufacturing dye sensitization photoelectric conversion device>

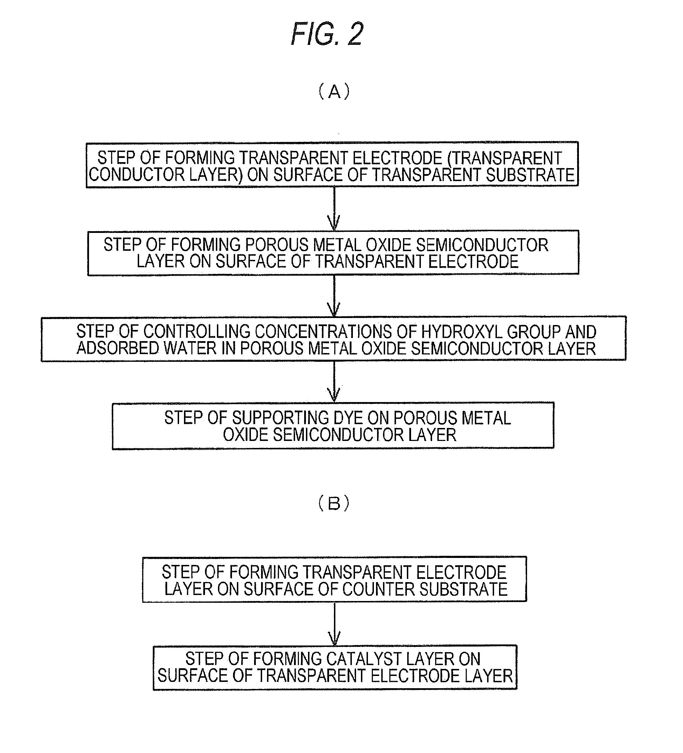

Fig. 2 is a diagram for explaining a method for manufacturing the dye sensitization photoelectric conversion device according to the embodiment of the invention. Fig. 2(A) is a diagram for explaining a process of forming a window electrode (working electrode), and Fig. 2(B) is a diagram for explaining a process of forming a counter electrode.

The method for manufacturing the dye sensitization photoelectric conversion device (dye sensitization solar cell) consists of the process of forming a window electrode (working electrode) (Fig 2(A)), the process of forming a counter electrode (Fig 2(B)), and the process of forming and sealing an electrolyte layer between the window electrode (working electrode) and the counter electrode that are arranged to face each other.

The window electrode (working electrode) consists of the transparent substrate 1, the transparent electrode 2, and the porous metal oxide semiconductor layer 3 on which photosensitizing dye is supported.

As illustrated in Fig. 2(A), the process of forming the window electrode (working electrode) includes a step of forming a transparent electrode (transparent conductor layer or negative electrode) 2 on a surface of the transparent substrate 1, a step of forming the porous metal oxide semiconductor layer 3 on a surface of the transparent electrode 2, a step of controlling the concentrations of hydroxyl group and adsorbed water on the porous metal oxide semiconductor layer 3, and a step of supporting a photosensitizing dye on the porous metal oxide semiconductor layer 3.

During the step for controlling the concentrations of hydroxyl group and adsorbed water on the porous metal oxide semiconductor layer 3, at least one of a plasma treatment, a UV irradiation treatment, and a heat treatment is carried out for a surface of the porous metal oxide semiconductor layer to control the concentrations of hydroxyl group and adsorbed water. For example, by modifying the condition for plasma treatment, for example, RF output, atmospheric gas, plasma treatment time, or the like, the concentrations of hydroxyl group and adsorbed water can be controlled.

By using the porous metal oxide semiconductor layer 3 in which the concentration of hydroxyl group is controlled to (a) 0.01 groups/(nm)² or more and 3.0 groups/(nm)² or less, (b) 0.02 groups/(nm)² or more and 2.0 groups/(nm)² or less, or (c) 0.05 groups/(nm)² or more and 0.9 groups/(nm)² or less, respectively, the dye sensitization solar cell can have the photoelectric conversion efficiency of (a) 3% or more, (b) 5% or more, or (c) 7% or more.

Further, by using the porous metal oxide semiconductor layer 3 in which the concentration of adsorbed water is controlled to (a) 0.03 pieces/(nm)² or more and 3.5 pieces/(nm)² or less, (b) 0.07 pieces/(nm)² or more and 2.5 pieces/(nm)² or less, or (c) 0.2 pieces/(nm)² or more and 2.0 pieces/(nm)² or less, respectively, the dye sensitization solar cell can have the photoelectric conversion efficiency of (a) 3% or more, (b) 5% or more, or (c) 7% or more.

As illustrated in Fig. 2(B), the process of forming the counter electrode includes a step of forming the transparent conductor layer 5b on a surface of the counter substrate 6, and a step of forming the platinum layer (catalyst layer) 5a on a surface of the transparent conductor layer 5b.

The process of forming and sealing an electrolyte layer between the window electrode (working electrode) and the counter electrode that are arranged to face each other includes a step of forming the electrolyte layer 4 between the window electrode (working electrode) and the counter electrode 5 and forming the sealing layer between the window electrode (working electrode) and the counter electrode so as to isolate the electrolyte layer 4 from the outside and prevent any leakage of the electrolyte layer 4 by using a sealing material that is not illustrated in the diagram.

As a result, the dye sensitization photoelectric conversion device having the configuration as illustrated in Fig. 1 can be manufactured.

To achieve a photoelectric conversion device having high conversion efficiency, it is preferable that the metal oxide semiconductor particles consist of at least one particles of titanium, zinc, tin, and niobium oxide, the average primary particle diameter is 5 nm or more and 500 nm or less, and they are titanium dioxide particles of brookite type or anatase type.

According to the method for manufacturing the dye sensitization solar cell of the invention, by using the metal oxide semiconductor particles having the average primary particle diameter which is 5 nm or more and 500 nm or less, a plasma treatment is carried out for the porous metal oxide semiconductor layer formed on a conductive layer under atmospheric pressure or reduced pressure, and as a result, the concentrations of the adsorbed water and hydroxyl group on the porous metal oxide semiconductor layer can be controlled to a desired level and a dye sensitization photoelectric conversion device having a high photoelectric conversion efficiency can be obtained.

When a resin film is used as a base and the porous metal oxide semiconductor layer is formed on a surface of a transparent electrode formed on the base, it is preferable to perform a plasma treatment of the porous metal oxide semiconductor layer while heating the porous metal oxide semiconductor layer within a range in which the base is not deteriorated, because, by doing so, the significant effect of controlling the amount of hydroxyl group and the amount of adsorbed water on the surface can be obtained and the photoelectric conversion efficiency can be improved more when a dye sensitization solar cell is manufactured by using it. The heating within the range in which the base is not deteriorated indicates the temperature of 170°C or lower when PET is used as the base, for example. When the base is PEN, it is 200°C or lower. Heating at the temperature higher than that may cause a problem in production such as distortion of the base.

Meanwhile, as a method of performing a plasma treatment in which a porous metal oxide semiconductor layer formed on a base is a subject to be treated, the roll to roll method by which a sheet like subject to be treated is processed accompanied with a rolling process while it is continuously moved in a plasma treatment device is a useful method for manufacturing a working electrode at low cost. In this case, by devising a way of modifying continuously the positional relation while maintaining close adhesion of a subject to be treated on a heating member, it is also possible to obtain continuous heating effect.

The porous metal oxide semiconductor layer is formed, for example, by preparing a paste in which metal oxide semiconductor particles are dispersed in a solvent, coating the paste on a surface of a transparent electrode, and evaporating the solvent. For preparing the paste, monodispersion colloidal particles that are obtained by hydrothermal synthesis may be used, if necessary. As for the method of forming a film of the porous metal oxide semiconductor layer, the coating method is preferred as a simple method with good productivity. A coating method using a spin coater, a coating method using screen printing, a coating method using a squeeze, a dip method, a spray method, a transfer method, a roller method, spray, or the like may be used. It is preferable that, after forming a film of the porous metal oxide semiconductor layer, it is dried at a temperature at which the base is not deteriorated to remove volatile components. Further, when the transparent base is a resin base, a pre-baking treatment at the temperature such as 150°C, which does not allow deterioration of the base, may be also carried out.

According to the invention, it is general to have a method of contacting · binding a sensitizing dye on a surface of the porous metal oxide semiconductor layer by taking advantage of affinity between the surface of the porous metal oxide semiconductor layer and the binding substituent group of the sensitizing group based on immersion of, as a transparent base itself, a porous metal oxide semiconductor layer formed on a transparent base, which has controlled the concentrations of hydroxyl group and adsorbed water on a surface as a result of a plasma treatment, in a solution in which a sensitizing dye is dissolved. However, the invention is not limited to this method.

In general, the photosensitizing dye for a dye sensitization solar cell such as a ruthenium complex has a structure in which the terminal is modified with a carboxy group or the like. As such, according to an interaction with a hydroxyl group on a surface of a porous metal oxide semiconductor layer, hydrogen bonds are formed on a surface of the porous metal oxide semiconductor layer, thus stable adsorption is allowed. For such reasons, the concentration of the hydroxyl group on a surface of the porous metal oxide semiconductor layer is a very important parameter.

Adsorption amount of the photosensitizing dye increases in accordance with the increase in hydroxyl group concentration on a surface of the porous metal oxide semiconductor layer. As a result, the electrons generated from the photosensitizing dye by illumination of light also increase to yield a higher photoelectric conversion efficiency of a dye sensitization solar cell. However, if the hydroxyl group concentration on the surface of the porous metal oxide semiconductor layer is excessively high, light adsorption by multi-molecular adsorption of a photosensitizing dye is generated and light may not reach the photosensitizing dye, which can originally generate electrons according to excitation, and thus characteristics of the cell are deteriorated.

The concentration of the hydroxyl group on the surface of the porous metal oxide semiconductor layer is preferably within a range in which single molecular layer of the photosensitizing dye is supported and the electrons generated from the photosensitizing dye by illumination of light can efficiently move toward to the porous metal oxide semiconductor layer.

When the concentration of the hydroxyl group on the surface of a porous metal oxide semiconductor layer increases, hydrophilicity also increases to have a higher concentration of adsorbed water on the surface. As a result, the multi-molecular adsorption of a photosensitizing dye is further facilitated.

To improve the photoelectric conversion efficiency of a dye sensitization solar cell, it is very important to control the dye amount on a surface of the porous metal oxide semiconductor layer so that the energy caused by light illumination is utilized to the maximum level as an electromotive force. To control the dye amount on a surface of the porous metal oxide semiconductor layer, it is necessary to control the concentration of hydroxyl group and the concentration of adsorbed water on a surface of the porous metal oxide semiconductor layer.

According to the invention, a photoelectric conversion device having high conversion efficiency is achieved by controlling the value of the concentration of hydroxyl group and the concentration of adsorbed water on a surface of the porous metal oxide semiconductor layer.

According to the invention, by controlling the concentration of hydroxyl group and the concentration of adsorbed water on a surface of the porous metal oxide semiconductor layer, a photoelectric conversion device having high conversion efficiency can be obtained with a simpler manufacturing method than a method of manufacturing a photoelectric conversion device which includes coating and calcining a solution containing metal oxide semiconductor particles dispersed therein to form the porous metal oxide semiconductor layer 3.

### <Thermal desorption spectrum>

By increasing the temperature of the porous metal oxide semiconductor layer 3, molecular species can be desorbed from a surface of the porous metal oxide semiconductor layer 3 in an order of from molecular species in weak binding state to molecular species in strong binding state. The molecular species (fragments) can be analyzed by mass spectrometer (MS), and a spectrum in which the intensity of ions of the desired desorbed molecular species is detected as a change in temperature increase can be obtained (herein below, referred to as "thermal desorption spectrum"). The analysis method is also referred to as temperature programmed desorption (TPD) or thermal desorption gas spectroscopy (TDS).

An apparatus for measuring thermal desorption to measure thermal desorption spectrum includes a heating device for heating the porous metal oxide semiconductor layer 3, which is placed in a vacuum chamber, and a mass analyzer connected to the vacuum chamber for detecting the molecular species that are desorbed according to temperature increase. When the discharge rate for discharging the vacuum chamber is sufficiently higher than the pressure change caused by desorbed gas generated from the porous metal oxide semiconductor layer 3, the desorbed gas will never stay in the vacuum chamber, and therefore the amount of desorbed gas at certain time point is proportional to partial pressure of the desorbed gas in the vacuum chamber.

The intensity of ions measured by mass spectrometer is proportional to partial pressure, that is, the intensity of ions measured is proportional to the amount of desorbed gas. Thus, by using the area intensity obtained by integration of intensity of ions of the desired desorbed molecular species against the temperature range from the start to the end of desorption, the desired desorbed molecular species that are generated from the porous metal oxide semiconductor layer 3 can be quantitatively obtained according to the quantification method to be described below (see, Non-Patent Document 3).

For example, by using a plurality of Si samples injected with a known but different amount of H⁺, proportional coefficient between the hydrogen desorption amount caused by thermal desorption and ion amount for m/z = 2 (area intensity) can be experimentally obtained in advance as an apparatus constant. For the molecular species M that is generated by thermal desorption from the porous metal oxide semiconductor layer 3, by using the ionization difficulty, fragmentation factor, and transmittance for the hydrogen and the molecular species M, the amount of the molecular species M generated by thermal desorption can be quantitatively obtained.

When the molecular species M is water to have m/z = 18, the water generated by thermal desorption from the porous metal oxide semiconductor layer 3 can be quantitatively detected as described above.

Next, examples relating to the dye sensitization photoelectric conversion device are described. In the Examples and the Comparative Examples, P25 (trade name, manufactured by Nippon AEROSIL, specific surface area of 48 m²/g according to BET method, containing titanium oxide of anatase type as a main component) was used as titanium oxide (the surface area according to the BET method was measured by using Belsorp device manufactured by Bel Japan, Inc.). Further, the surface area of the porous metal oxide semiconductor layer was the specific surface area obtained according to the BET method and it was measured by using Belsorp device manufactured by Bel Japan, Inc.

Further, the concentrations of the adsorbed water and hydroxyl group on a surface of the porous metal oxide semiconductor layer were measured by analyzing the thermal desorption spectrum measured under the temperature increase rate of 30°C/min by using a thermal desorption analyzer (trade name: WA1000S/W, manufactured by ESCO Co., Ltd.). The lower detection limit for the concentrations of the absorbed water and hydroxyl group is 0.005 pieces/(nm)².

### [EXAMPLES]

First, in Example 1 to Example 6, the relation between the concentrations of the adsorbed water and hydroxyl group on a surface of the porous metal oxide semiconductor layer and plasma power (that is, RF output) according to plasma treatment is described.

### [Example 1]

A soda lime glass substrate having no absorption in visible light range is used as the transparent substrate 1 and the transparent electrode (transparent electrode layer) 2 having no absorption in visible light range is formed thereon to have thickness of 100 nm according to a standard sputtering method. A dispersion of titanium dioxide was prepared, coated on a surface of the transparent electrode 2, and subjected to a calcination treatment to form a porous metal oxide semiconductor layer.

By using titanium dioxide (anatase type) as metal oxide semiconductor particles, the porous metal oxide semiconductor layer (titanium dioxide layer) 3 was formed on a surface of the transparent electrode 2 as follows.

By using a bead disperser, 5 g of titanium oxide (Trade name: P25, manufactured by Nippon AEROSIL) was dispersed in a solvent (45 g of ethanol) to prepare a dispersion solution, which was then coated on a surface of the transparent electrode 2 by coating method. Then, it was calcined in an oven at 150°C for 1 hour to form a porous metal oxide semiconductor layer.

The resulting porous metal oxide semiconductor layer was subjected to an oxidation treatment under oxygen atmosphere with reduced pressure by using a barrel type apparatus for plasma treatment to control the concentrations of the adsorbed water and hydroxyl group on the surface of the porous metal oxide semiconductor layer to a desired level.

Further, the plasma treatment was performed under the plasma treatment condition including gas atmosphere of oxygen (100 %), gas flow amount of 100 sccm, pressure of 100 Pa, RF output of 300 W, and treatment time of 5 min.

The resulting porous metal oxide semiconductor layer which has been prepared to have controlled concentrations of the adsorbed water and hydroxyl group as described above has the thickness of 10 µm and the specific surface area of the porous metal oxide semiconductor layer was 42 m²/g.

The concentrations of the adsorbed water and hydroxyl group on a surface of the porous metal oxide semiconductor layer were measured by using a thermal desorption analyzer. As a result, it was found out that the hydroxyl group concentration is 1.0 groups/(nm)² and the adsorbed water concentration is 2.0 pieces/(nm)², and the concentrations of the adsorbed water and hydroxyl group are controlled well on a surface of the porous metal oxide semiconductor layer. Meanwhile, the measurement of the concentrations of the adsorbed water and hydroxyl group on a surface of the porous metal oxide semiconductor layer will be described below.

Onto the porous metal oxide semiconductor layer obtained after the plasma treatment, a dye was supported as follows.

A dye solution in which 25 mg of a dye (cisbis(isothiocyanato)bis(2,2'-bipyridyl-4,4'-dicarboxylic acid) ruthenium (II) 2 tetrabitylammonium complex (common name: N719)) is contained in 50 mL of ethanol was prepared. The transparent substrate 1 on which the porous metal oxide semiconductor layer is formed was impregnated in the dye solution for dye adsorption, and by washing the transparent substrate 1 on which the porous metal oxide semiconductor layer is formed with ethanol, excess dyes were removed followed by drying.

Next, a spacer made of a resin film (trade name: "HIMILAN" film, manufactured by DUPONT-MITSUI POLYCHEMICALS CO., LTD., those with thickness of 25 µm were used) was inserted to a peripheral region, and while maintaining a gap, the counter substrate 6 on which the counter electrode 5 is formed and the transparent substrate 1 on which the porous metal oxide semiconductor layer is formed are arranged to face each other. After injecting an electrolyte liquid to the gap, the gap was sealed by using an acrylic UV curable resin.

Meanwhile, the electrolyte liquid contains methoxypropionitrile (1.5 g), sodium iodide (0.02 g), 1-propyl-2,3-iododimethyl imidazolium (0.8 g), iodine (0.1 g), and 4-tert-butylpyridine (TBP) (0.05 g).

By using the porous metal oxide semiconductor layer as prepared from the above, a dye sensitization solar cell was then manufactured. The dye sensitization solar cell was illuminated with pseudo-sunlight (AM 1.5, 100 mw/cm²) and short circuit current, open circuit voltage, fill factor (shape factor), and photoelectric conversion efficiency were measured. The dye sensitization solar cell was shown to have the photoelectric conversion efficiency of 7.0%. Thus, it was found out that, by using a porous metal oxide semiconductor layer in which the concentrations of adsorbed water and hydroxyl group are controlled by plasma treatment of a surface, the photoelectric conversion efficiency of a dye sensitization solar cell can be improved.

### [Example 2]

The porous metal oxide semiconductor layer (titanium dioxide layer) 3 that is formed on a surface of the transparent electrode 2 in a similar manner to Example 1 was subjected to an oxidation treatment in a similar manner to Example 1 to control the concentrations of the adsorbed water and hydroxyl group on a surface of the porous metal oxide semiconductor layer to a desired concentration, with the proviso that the plasma treatment was performed under the plasma treatment condition including gas atmosphere of oxygen (100%), gas flow amount of 100 sccm, pressure of 100 Pa, RF output of 200 W, and treatment time of 5 min.

The resulting porous metal oxide semiconductor layer which has been prepared to have controlled concentrations of the adsorbed water and hydroxyl group has the thickness of 10 µm and the specific surface area of the porous metal oxide semiconductor layer was 45 m²/g.

The concentrations of the adsorbed water and hydroxyl group on a surface of the porous metal oxide semiconductor layer were measured in a similar manner to Example 1 by using a thermal desorption analyzer. As a result, it was found out that the hydroxyl group concentration is 1.8 groups/(nm)² and the adsorbed water concentration is 2.6 pieces/(nm)², and the concentrations of the adsorbed water and hydroxyl group are controlled well on a surface of the porous metal oxide semiconductor layer.

Further, the dye sensitization solar cell was manufactured in a similar manner to Example 1 by using the porous metal oxide semiconductor layer which has controlled concentrations of the adsorbed water and hydroxyl group according to UV irradiation treatment, and the photoelectric conversion efficiency of the dye sensitization solar cell was found to be 5.5%, which is a favorable value.

### [Example 3]

The porous metal oxide semiconductor layer (titanium dioxide layer) 3 that is formed on a surface of the transparent electrode 2 in a similar manner to Example 1 was subjected to an oxidation treatment in a similar manner to Example 1 to control the concentrations of the adsorbed water and hydroxyl group on a surface of the porous metal oxide semiconductor layer to a desired concentration, with the proviso that the plasma treatment was performed under the plasma treatment condition including gas atmosphere of oxygen (100%), gas flow amount of 100 sccm, pressure of 100 Pa, RF output of 100 W, and treatment time of 5 min.

The resulting porous metal oxide semiconductor layer which has been prepared to have controlled concentrations of the adsorbed water and hydroxyl group has the thickness of 10 µm and the specific surface area of the porous metal oxide semiconductor layer was 48 m²/g.

The concentrations of the adsorbed water and hydroxyl group on a surface of the porous metal oxide semiconductor layer were measured in a similar manner to Example 1 by using a thermal desorption analyzer. As a result, it was found out that the hydroxyl group concentration is 2.9 groups/(nm)² and the adsorbed water concentration is 3.5 pieces/(nm)², and the concentrations of the adsorbed water and hydroxyl group are controlled well on a surface of the porous metal oxide semiconductor layer.

Further, the dye sensitization solar cell was manufactured in a similar manner to Example 1 by using the porous metal oxide semiconductor layer which has controlled concentrations of the adsorbed water and hydroxyl group according to UV irradiation treatment, and the photoelectric conversion efficiency of the dye sensitization solar cell was found to be 3.0%, which is a favorable value.

### [Example 4]

The porous metal oxide semiconductor layer (titanium dioxide layer) 3 that is formed on a surface of the transparent electrode 2 in a similar manner to Example 1 was subjected to an oxidation treatment in a similar manner to Example 1 to control the concentrations of the adsorbed water and hydroxyl group on a surface of the porous metal oxide semiconductor layer to a desired concentration, with the proviso that the plasma treatment was performed under the plasma treatment condition including gas atmosphere of oxygen (100%), gas flow amount of 100 sccm, pressure of 100 Pa, RF output of 400 W, and treatment time of 5 min.

The resulting porous metal oxide semiconductor layer which has been prepared to have controlled concentrations of the adsorbed water and hydroxyl group has the thickness of 10 µm and the specific surface area of the porous metal oxide semiconductor layer was 40 m²/g.

The concentrations of the adsorbed water and hydroxyl group on a surface of the porous metal oxide semiconductor layer were measured in a similar manner to Example 1 by using a thermal desorption analyzer. As a result, it was found out that the hydroxyl group concentration is 0.5 groups/(nm)² and the adsorbed water concentration is 1.0 pieces/(nm)², and the concentrations of the adsorbed water and hydroxyl group are controlled well on a surface of the porous metal oxide semiconductor layer.

Further, the dye sensitization solar cell was manufactured in a similar manner to Example 1 by using the porous metal oxide semiconductor layer which has controlled concentrations of the adsorbed water and hydroxyl group according to UV irradiation treatment, and the photoelectric conversion efficiency of the dye sensitization solar cell was found to be 8.0%, which is a favorable value.

### [Example 5]

The porous metal oxide semiconductor layer (titanium dioxide layer) 3 that is formed on a surface of the transparent electrode 2 in a similar manner to Example 1 was subjected to an oxidation treatment in a similar manner to Example 1 to control the concentrations of the adsorbed water and hydroxyl group on a surface of the porous metal oxide semiconductor layer to a desired concentration, with the proviso that the plasma treatment was performed under the plasma treatment condition including gas atmosphere of oxygen (100%), gas flow amount of 100 sccm, pressure of 100 Pa, RF output of 500 W, and treatment time of 5 min.

The resulting porous metal oxide semiconductor layer which has been prepared to have controlled concentrations of the adsorbed water and hydroxyl group has the thickness of 10 µm and the specific surface area of the porous metal oxide semiconductor layer was 37 m²/g.

The concentrations of the adsorbed water and hydroxyl group on a surface of the porous metal oxide semiconductor layer were measured in a similar manner to Example 1 by using a thermal desorption analyzer. As a result, it was found out that the hydroxyl group concentration is 0.1 groups/(nm)² and the adsorbed water concentration is 0.5 pieces/(nm)², and the concentrations of the adsorbed water and hydroxyl group are controlled well on a surface of the porous metal oxide semiconductor layer.

Further, the dye sensitization solar cell was manufactured in a similar manner to Example 1 by using the porous metal oxide semiconductor layer which has controlled concentrations of the adsorbed water and hydroxyl group according to UV irradiation treatment, and the photoelectric conversion efficiency of the dye sensitization solar cell was found to be 8.0%, which is a favorable value.

### [Example 6]

The porous metal oxide semiconductor layer (titanium dioxide layer) 3 that is formed on a surface of the transparent electrode 2 in a similar manner to Example 1 was subjected to an oxidation treatment in a similar manner to Example 1 to control the concentrations of the adsorbed water and hydroxyl group on a surface of the porous metal oxide semiconductor layer to a desired concentration, with the proviso that the plasma treatment was performed under the plasma treatment condition including gas atmosphere of oxygen (100%), gas flow amount of 100 sccm, pressure of 100 Pa, RF output of 700 W, and treatment time of 5 min.

The resulting porous metal oxide semiconductor layer which has been prepared to have controlled concentrations of the adsorbed water and hydroxyl group has the thickness of 10 µm and the specific surface area of the porous metal oxide semiconductor layer was 36 m²/g.

The concentrations of the adsorbed water and hydroxyl group on a surface of the porous metal oxide semiconductor layer were measured in a similar manner to Example 1 by using a thermal desorption analyzer. As a result, it was found out that the hydroxyl group concentration is 0.01 groups/(nm)² and the adsorbed water concentration is 0.03 pieces/(nm)², and the concentrations of the adsorbed water and hydroxyl group are controlled well on a surface of the porous metal oxide semiconductor layer.

Further, the dye sensitization solar cell was manufactured in a similar manner to Example 1 by using the porous metal oxide semiconductor layer which has controlled concentrations of the adsorbed water and hydroxyl group according to UV irradiation treatment, and the photoelectric conversion efficiency of the dye sensitization solar cell was found to be 3.0%, which is a favorable value.

In Example 6, the concentrations of the adsorbed water and hydroxyl group on a surface of the porous metal oxide semiconductor layer are small, and thus the number of dyes adsorbed onto the porous metal oxide semiconductor layer is lowered. As a result, it was found out that total number of electrons that are excited by light illumination is decreased, and thus the photo conversion efficiency is deteriorated.

### [Example 7]

The porous metal oxide semiconductor layer (titanium dioxide layer) 3 that is formed on a surface of the transparent electrode 2 in a similar manner to Example 1 was subjected to an atmospheric pressure plasma treatment under atmospheric pressure condition to control the concentrations of the adsorbed water and hydroxyl group on a surface of the porous metal oxide semiconductor layer.

Specifically, the plasma treatment was performed for the porous metal oxide semiconductor layer under the plasma treatment condition including the He gas flow amount of 2000 sccm, oxygen gas flow amount of 100 sccm, atmospheric pressure, RF output of 300 W, and treatment time of 5 min.

The resulting porous metal oxide semiconductor layer which has been prepared to have controlled concentrations of the adsorbed water and hydroxyl group has the thickness of 10 µm and the specific surface area of the porous metal oxide semiconductor layer was 48 m²/g.

The concentrations of the adsorbed water and hydroxyl group on a surface of the porous metal oxide semiconductor layer were measured in a similar manner to Example 1 by using a thermal desorption analyzer. As a result, it was found out that the hydroxyl group concentration is 2.8 groups/(nm)² and the adsorbed water concentration is 3.8 pieces/(nm)², and the concentrations of the adsorbed water and hydroxyl group are controlled well on a surface of the porous metal oxide semiconductor layer.

Further, the dye sensitization solar cell was manufactured in a similar manner to Example 1 by using the porous metal oxide semiconductor layer which has controlled concentrations of the adsorbed water and hydroxyl group according to atmospheric pressure plasma treatment, and the photoelectric conversion efficiency of the dye sensitization solar cell was found to be 3.5%, which is a favorable value.

Next, in Example 8 to Example 10 given below, a method for controlling the concentrations of the adsorbed water and hydroxyl group on a surface of the porous metal oxide semiconductor layer that is obtained without having a plasma treatment is explained.

### [Example 8]

By using a bead disperser, 5 g of titanium oxide (Trade name: P25, manufactured by Nippon AEROSIL) and an additive (titanium ethoxide, 0.5 g) were dispersed in a solvent (45 g of ethanol) to prepare a dispersion solution, which was then coated on a surface of the transparent electrode 2 by coating method. Then, it was calcined in an oven at 150°C for 1 hour to form a porous metal oxide semiconductor layer.

The resulting porous metal oxide semiconductor layer was subjected to a heat treatment under ultra-high vacuum (3.0 × 10⁻⁷ torr) at 150°C for 60 min. to control the concentrations of the adsorbed water and hydroxyl group on a surface of the porous metal oxide semiconductor layer without having a plasma treatment.

The resulting porous metal oxide semiconductor layer which has been prepared to have controlled concentrations of the adsorbed water and hydroxyl group has the thickness of 10 µm and the specific surface area of the porous metal oxide semiconductor layer was 46 m²/g.

The concentrations of the adsorbed water and hydroxyl group on a surface of the porous metal oxide semiconductor layer were measured in a similar manner to Example 1 by using a thermal desorption analyzer. As a result, it was found out that the hydroxyl group concentration is 2.0 groups/(nm)² and the adsorbed water concentration is 2.8 pieces/(nm)², and the concentrations of the adsorbed water and hydroxyl group are controlled well on a surface of the porous metal oxide semiconductor layer.

Further, the dye sensitization solar cell was manufactured in a similar manner to Example 1 by using the porous metal oxide semiconductor layer which has controlled concentrations of the adsorbed water and hydroxyl group according to the heat treatment under ultra-high vacuum, and the photoelectric conversion efficiency of the dye sensitization solar cell was found to be 5.0%, which is a favorable value.

### [Example 9]

By using a bead disperser, 5 g of titanium oxide (Trade name: P25, manufactured by Nippon AEROSIL) was dispersed in a similar manner to Example 1 in a solvent (45 g of ethanol) to prepare a dispersion solution, which was then coated on a surface of the transparent electrode 2 by coating method. Then, it was calcined in an oven at 150°C for 1 hour to form a porous metal oxide semiconductor layer.

The resulting porous metal oxide semiconductor layer was subjected to a UV irradiation treatment using an UV illuminator installed in a vacuum apparatus followed by an oxidation treatment to control the concentrations of the adsorbed water and hydroxyl group on a surface of the porous metal oxide semiconductor layer without having a plasma treatment.

The UV irradiation treatment was carried out under the condition that the gas atmosphere is oxygen (100%), pressure is 1×10⁻⁷ torr, and time for treatment is 5 min.

The resulting porous metal oxide semiconductor layer which has been prepared to have controlled concentrations of the adsorbed water and hydroxyl group has the thickness of 10 µm and the specific surface area of the porous metal oxide semiconductor layer was 42 m²/g.

The concentrations of the adsorbed water and hydroxyl group on a surface of the porous metal oxide semiconductor layer were measured in a similar manner to Example 1 by using a thermal desorption analyzer. As a result, it was found out that the hydroxyl group concentration is 1.8 groups/(nm)² and the adsorbed water concentration is 2.6 pieces/(nm)², and the concentrations of the adsorbed water and hydroxyl group are controlled well on a surface of the porous metal oxide semiconductor layer.

Further, the dye sensitization solar cell was manufactured in a similar manner to Example 1 by using the porous metal oxide semiconductor layer which has controlled concentrations of the adsorbed water and hydroxyl group according to the UV irradiation treatment, and the photoelectric conversion efficiency of the dye sensitization solar cell was found to be 5.5%, which is a favorable value.

### [Example 10]

By using a bead disperser, 5 g of titanium oxide (Trade name: P25, manufactured by Nippon AEROSIL) was dispersed in a similar manner to Example 1 in a solvent (45 g of ethanol) to prepare a dispersion solution, which was then coated on a surface of the transparent electrode 2 by coating method. Then, it was calcined in an oven at 150°C for 1 hour to form a porous metal oxide semiconductor layer.

The resulting porous metal oxide semiconductor layer was subjected to a UV irradiation treatment using an UV illuminator under atmospheric condition followed by an oxidation treatment to control the concentrations of the adsorbed water and hydroxyl group on a surface of the porous metal oxide semiconductor layer without having a plasma treatment. The UV irradiation treatment was carried out under the condition that time for UV treatment is 5 min.

The resulting porous metal oxide semiconductor layer which has been prepared to have controlled concentrations of the adsorbed water and hydroxyl group has the thickness of 10 µm and the specific surface area of the porous metal oxide semiconductor layer was 48 m²/g.

The concentrations of the adsorbed water and hydroxyl group on a surface of the porous metal oxide semiconductor layer were measured in a similar manner to Example 1 by using a thermal desorption analyzer. As a result, it was found out that the hydroxyl group concentration is 3.3 groups/(nm)² and the adsorbed water concentration is 3.7 pieces/(nm)². Further, the photoelectric conversion efficiency of the dye sensitization solar cell which uses the above porous metal oxide semiconductor layer was found to be 2%, which is a favorable value.

In Example 12 to Example 16 that are explained below, the concentrations of the adsorbed water and hydroxyl group on a surface of the porous metal oxide semiconductor layer were controlled by performing a plasma treatment under the gas with reduced pressure other than oxygen, in which the porous metal oxide semiconductor layer 3 (titanium dioxide layer) is formed on a surface of the transparent electrode 2 in a similar manner to Example 1.

In Example 11 to Example 15 that are explained below, the plasma treatment was carried out for the porous metal oxide semiconductor layer under the plasma treatment condition including gas atmosphere other than oxygen (100%), the gas flow amount of 100 sccm, pressure of 100 Pa, RF output of 300 W, and treatment time of 5 min. The concentrations of the adsorbed water and hydroxyl group on a surface of the porous metal oxide semiconductor layer were measured in a similar manner to Example 1 and the photoelectric conversion efficiency of the dye sensitization solar cell which uses the porous metal oxide semiconductor layer was also measured.

### [Example 11]

When the gas atmosphere is carbon monoxide (CO), the porous metal oxide semiconductor layer which has been prepared to have controlled concentrations of the adsorbed water and hydroxyl group by the plasma treatment has the thickness of 10 µm and the specific surface area of the porous metal oxide semiconductor layer was 45 m²/g.

The concentrations of the adsorbed water and hydroxyl group on a surface of the porous metal oxide semiconductor layer were measured in a similar manner to Example 1 by using a thermal desorption analyzer. As a result, it was found out that on a surface of the porous metal oxide semiconductor layer the hydroxyl group concentration is 2.0 groups/(nm)² and the adsorbed water concentration is 2.8 pieces/(nm)², and the photoelectric conversion efficiency of the dye sensitization solar cell using the porous metal oxide semiconductor layer was found to be 5.0%, which is a favorable value.

### [Example 12]

When the gas atmosphere is carbon dioxide (CO₂), the porous metal oxide semiconductor layer which has been prepared to have controlled concentrations of the adsorbed water and hydroxyl group by the plasma treatment has the thickness of 10 µm and the specific surface area of the porous metal oxide semiconductor layer was 45 m²/g.

The concentrations of the adsorbed water and hydroxyl group on a surface of the porous metal oxide semiconductor layer were measured in the same manner as Example 1 by using a thermal desorption analyzer. As a result, it was found out that on a surface of the porous metal oxide semiconductor layer, the hydroxyl group concentration is 2.0 groups/(nm)² and the adsorbed water concentration is 2.8 pieces/(nm)², and the photoelectric conversion efficiency of the dye sensitization solar cell using the porous metal oxide semiconductor layer was found to be 5.0%, which is a favorable value.

### [Example 13]

When the gas atmosphere is nitric monoxide (NO), the porous metal oxide semiconductor layer which has been prepared to have controlled concentrations of the adsorbed water and hydroxyl group by the plasma treatment has the thickness of 10 µm and the specific surface area of the porous metal oxide semiconductor layer was 45 m²/g.

The concentrations of the adsorbed water and hydroxyl group on a surface of the porous metal oxide semiconductor layer were measured in the same manner as Example 1 by using a thermal desorption analyzer. As a result, it was found out that on a surface of the porous metal oxide semiconductor layer, the hydroxyl group concentration is 2.5 groups/(nm)² and the adsorbed water concentration is 3.2 pieces/(nm)², and the photoelectric conversion efficiency of the dye sensitization solar cell using the porous metal oxide semiconductor layer was found to be 4.0%, which is a favorable value.

### [Example 14]

When the gas atmosphere is nitric dioxide (NO₂), the porous metal oxide semiconductor layer which has been prepared to have controlled concentrations of the adsorbed water and hydroxyl group by the plasma treatment has the thickness of 10 µm and the specific surface area of the porous metal oxide semiconductor layer was 45 m²/g.

The concentrations of the adsorbed water and hydroxyl group on a surface of the porous metal oxide semiconductor layer were measured in the same manner as Example 1 by using a thermal desorption analyzer. As a result, it was found out that on a surface of the porous metal oxide semiconductor layer, the hydroxyl group concentration is 2.5 groups/(nm)² and the adsorbed water concentration is 3.2 pieces/(nm)², and the photoelectric conversion efficiency of the dye sensitization solar cell using the porous metal oxide semiconductor layer was found to be 4.0%, which is a favorable value.

### [Example 15]

When the gas atmosphere is nitrogen dioxide (N₂O), the porous metal oxide semiconductor layer which has been prepared to have controlled concentrations of the adsorbed water and hydroxyl group by the plasma treatment has the thickness of 10 µm and the specific surface area of the porous metal oxide semiconductor layer was 45 m²/g.

The concentrations of the adsorbed water and hydroxyl group on a surface of the porous metal oxide semiconductor layer were measured in the same manner as Example 1 by using a thermal desorption analyzer. As a result, it was found out that on a surface of the porous metal oxide semiconductor layer, the hydroxyl group concentration is 2.5 groups/(nm)² and the adsorbed water concentration is 3.2 pieces/(nm)², and the photoelectric conversion efficiency of the dye sensitization solar cell using the porous metal oxide semiconductor layer was found to be 4.0%, which is a favorable value.

### [Example 16]

In Example 1 to Example 15, the oxidation treatment of the porous metal oxide semiconductor layer was performed by using a barrel type plasma treatment apparatus. However, in Example 16, the oxidation treatment of the porous metal oxide semiconductor layer (titanium dioxide layer) 3, which has been formed on a surface of the transparent electrode 2 in the same manner as Example 1, was performed by using a parallel plate type plasma treatment apparatus under oxygen atmosphere with reduced pressure to control the concentrations of adsorbed water and hydroxyl group on a surface of the porous metal oxide semiconductor layer.

Further, with the plasma generated by parallel plate anode couple method (frequency of 13.56 MHz), the plasma treatment was carried out under the plasma treatment condition including gas atmosphere of oxygen (100%), the gas flow amount of 100 sccm, pressure of 100 Pa, RF output of 300 W, and treatment time of 5 min.

As a result, the porous metal oxide semiconductor layer which has been prepared to have controlled concentrations of the adsorbed water and hydroxyl group has the thickness of 10 µm and the specific surface area of the porous metal oxide semiconductor layer was 43 m²/g.

Further, the concentrations of the adsorbed water and hydroxyl group on a surface of the porous metal oxide semiconductor layer were measured in the same manner as Example 1 and the photoelectric conversion efficiency of the dye sensitization solar cell which uses the porous metal oxide semiconductor layer were also measured. As a result, it was found out that concentrations of the adsorbed water and hydroxyl group on a surface of the porous metal oxide semiconductor layer were 2.8 pieces/(nm)² and 2.0 groups/(nm)², respectively, and the photoelectric conversion efficiency was found to be 5.0%, which is a favorable value.

### [Comparative Example 1]

The porous metal oxide semiconductor layer of Comparative Example 1 is the same as the porous metal oxide semiconductor layer of Example 1 except that it is in a state before performing an oxidation treatment using a barrel type plasma treatment apparatus. Specifically, by using a bead disperser, 5 g of titanium oxide (Trade name: P25, manufactured by Nippon AEROSIL) was dispersed in the same manner as Example 1 in a solvent (45 g of ethanol) to prepare a dispersion solution, which was then coated on a surface of the transparent electrode 2 by a coating method. Then, it was calcined in an oven at 150°C for 1 hour to form a porous metal oxide semiconductor layer.

The resulting porous metal oxide semiconductor layer has the thickness of 10 µm and the specific surface area of the porous metal oxide semiconductor layer was 50 m²/g_{.}

The concentrations of the adsorbed water and hydroxyl group on a surface of the porous metal oxide semiconductor layer were measured in the same manner as Example 1 by using a thermal desorption analyzer. As a result, it was found out that the concentrations of the hydroxyl group and adsorbed water were 4.5 groups/(nm)² and 4.5 pieces/(nm)², respectively.

Further, the dye sensitization solar cell that is manufactured by using the porous metal oxide semiconductor layer which has been supported with a dye in the same manner as Example 1 was tested for short circuit current, open circuit voltage, fill factor (shape factor), and photoelectric conversion efficiency in the same manner as Example 1. As a result, the photoelectric conversion efficiency was found to be 1.0%.

Results of the Examples that are explained in the above are given below.

### <Condition for forming titanium dioxide electrode layer (porous metal oxide semiconductor layer) of dye sensitization solar cell and relation among hydroxyl group concentration, adsorbed water concentration, and photoelectric conversion efficiency>

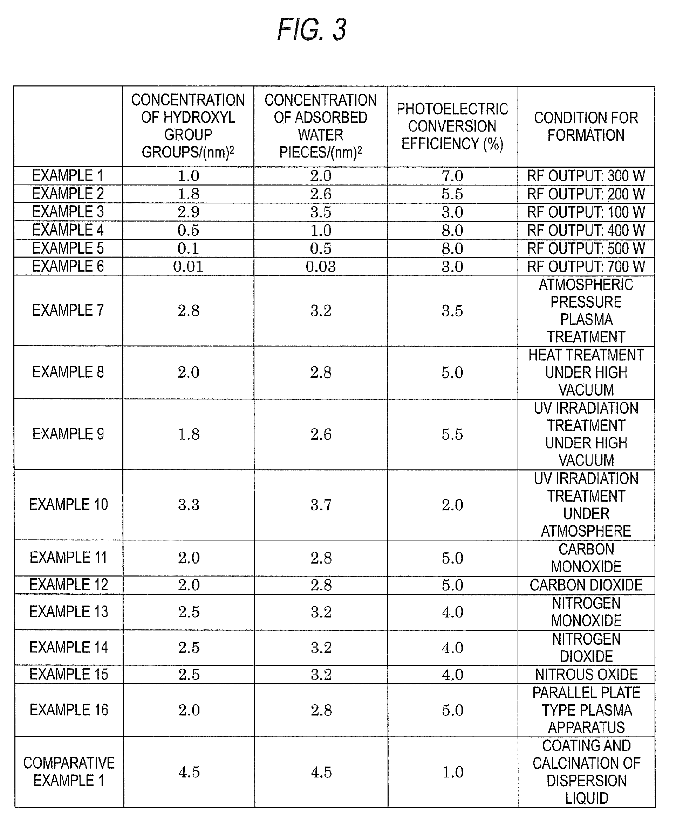

Fig. 3 is a drawing for explaining the condition for forming the titanium dioxide layer used for the dye sensitization solar cell of the Examples of the invention, and the relation among the hydroxyl group concentration, the adsorbed water concentration, and the photoelectric conversion efficiency in the titanium dioxide layer. The condition for forming the layer only as illustrated in Fig. 3 represents an outline of the method for forming the titanium dioxide electrode layer that is explained in each example described above.

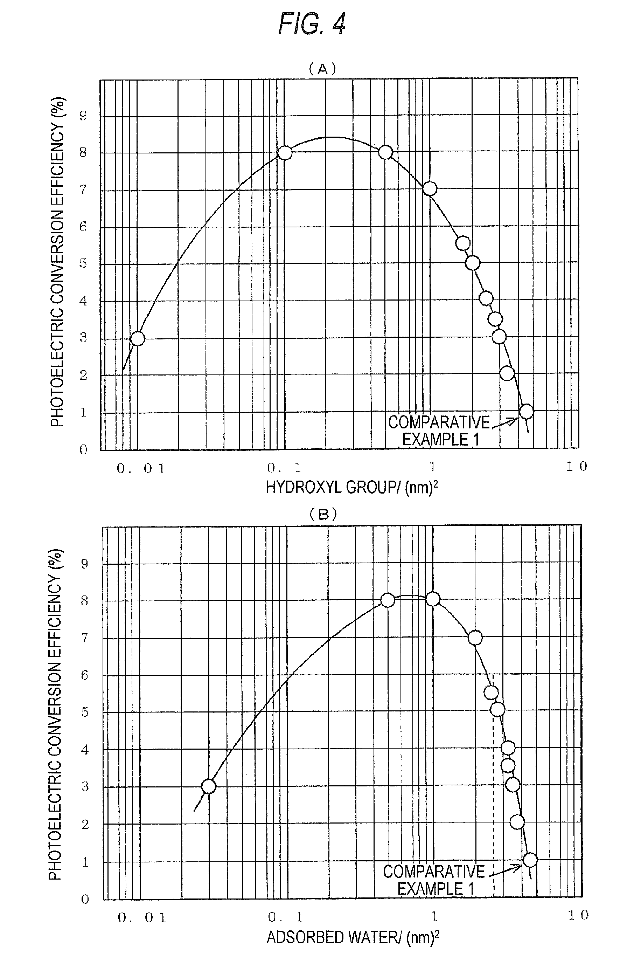

Fig. 4 is a drawing for explaining the relation between concentrations of hydroxyl group and adsorbed water on a surface of the titanium dioxide layer of the Examples of the invention and photoelectric conversion efficiency.

Fig. 4(A) illustrates a smooth curve obtained from plotting of the relation between the hydroxyl group concentration and photoelectric conversion efficiency that is illustrated in Fig. 3, in which the horizontal axis represents the concentration of hydroxyl group (groups/(nm)²) and the vertical axis represents the photoelectric conversion efficiency (%).

Fig. 4(B) illustrates a smooth curve obtained from plotting of the relation between the adsorbed water concentration and the photoelectric conversion efficiency that is illustrated in Fig. 3, in which the horizontal axis represents the concentration of adsorbed water (pieces/(nm)²) and the vertical axis represents the photoelectric conversion efficiency (%).

As illustrated in Fig. 3 and Fig. 4, the photoelectric conversion efficiency of the dye sensitization solar cell is higher in every Example compared to Comparative Example 1.

As illustrated in Fig. 4(A), the photoelectric conversion efficiency increases to the maximum in accordance with the increase in hydroxyl group concentration on a surface of the titanium dioxide electrode layer (porous metal oxide semiconductor layer), and as the hydroxyl group concentration is further increased, the photoelectric conversion efficiency starts to decrease.

The maximum value obtained for the photoelectric conversion efficiency when the hydroxyl group concentration on a surface of the titanium dioxide electrode layer is changed indicates that, as described in Patent Document 1, it is impossible to increase the photoelectric conversion efficiency to its maximum and have it in a desirable state only by increasing the adsorption amount of a dye based on increased hydroxyl group concentration on a surface by plasma treatment of a titanium dioxide layer, and thus to have the photoelectric conversion efficiency equal to or larger than a certain value, there is a desirable hydroxyl group concentration range.

As illustrated in Fig. 4(A), when the hydroxyl group concentration on a surface of the titanium dioxide electrode layer (porous metal oxide semiconductor layer) is controlled to 0.01 groups/(nm)² to 4.0 groups/(nm)², a dye sensitization solar cell having higher photoelectric conversion efficiency than Comparative Example 1 can be achieved.

Further, when the hydroxyl group concentration on a surface of the titanium dioxide electrode layer (porous metal oxide semiconductor layer) is controlled to 0.01 groups/(nm)² to 3.0 groups/(nm)², a dye sensitization solar cell having photoelectric conversion efficiency equal to or higher than 3% can be achieved.

Further, when the hydroxyl group concentration on a surface of the titanium dioxide electrode layer (porous metal oxide semiconductor layer) is controlled to 0.02 groups/(nm)² to 2.0 groups/(nm)², a dye sensitization solar cell having photoelectric conversion efficiency equal to or higher than 5% can be achieved.

Still further, when the hydroxyl group concentration on a surface of the titanium dioxide electrode layer (porous metal oxide semiconductor layer) is controlled to 0.05 groups/(nm)² to 0.9 groups/(nm)², a dye sensitization solar cell having photoelectric conversion efficiency equal to or higher than 7% can be achieved.

As illustrated in Fig. 4(B), the photoelectric conversion efficiency increases to the maximum in accordance with the increase in adsorbed water concentration on a surface of the titanium dioxide electrode layer (porous metal oxide semiconductor layer), and as the adsorbed water concentration is further increased, the photoelectric conversion efficiency starts to decrease.

As illustrated in Fig. 4(B), when the adsorbed water concentration on a surface of the titanium dioxide electrode layer (porous metal oxide semiconductor layer) is controlled to 0.03 pieces/(nm)² to 4.0 pieces/(nm)², a dye sensitization solar cell having higher photoelectric conversion efficiency than Comparative Example 1 can be achieved.

Further, when the adsorbed water concentration on a surface of the titanium dioxide electrode layer (porous metal oxide semiconductor layer) is controlled to 0.03 pieces/(nm)² to 3.5 pieces/(nm)², a dye sensitization solar cell having photoelectric conversion efficiency equal to or higher than 3% can be achieved.

Further, when the adsorbed water concentration on a surface of the titanium dioxide electrode layer (porous metal oxide semiconductor layer) is controlled to 0.07 pieces/(nm)² to 2.5 pieces/(nm)², a dye sensitization solar cell having photoelectric conversion efficiency equal to or higher than 5% can be achieved.

Still further, when the adsorbed water concentration on a surface of the titanium dioxide electrode layer (porous metal oxide semiconductor layer) is controlled to 0.2 pieces/(nm)² to 2.0 pieces/(nm)², a dye sensitization solar cell having photoelectric conversion efficiency equal to or higher than 7% can be achieved.

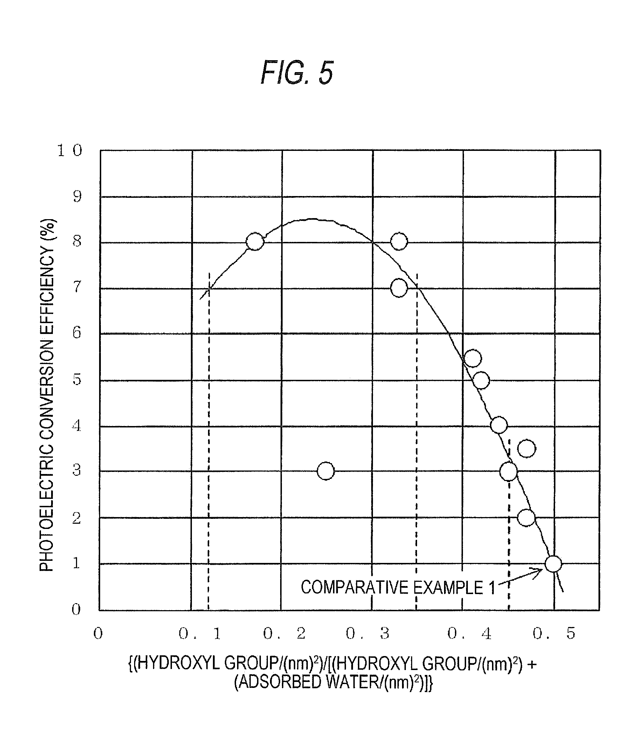

Fig. 5 is a drawing for explaining the relation between the concentrations of hydroxyl group and adsorbed water on a surface of the titanium dioxide layer of the Examples of the invention and photoelectric conversion efficiency.

In Fig. 5, the horizontal axis represents {[concentration of hydroxyl group (groups/(nm)²)]/[(concentration of hydroxyl group (groups/(nm)²)) + (concentration of adsorbed water (pieces/(nm)²))]} and the vertical axis represents the photoelectric conversion efficiency (%). In the explanations given below, the ratio defined by {[concentration of hydroxyl group (groups/(nm)²)]/[(concentration of hydroxyl group (groups/(nm)²)) + (concentration of adsorbed water (pieces/(nm)²))]} is taken as α. Fig. 5 illustrates a smooth curve obtained from result of plotting the photoelectric conversion efficiency against α calculated from the results of Fig. 3. In Fig. 5, the result corresponding to Example 6 is outside the illustrated curve, as it has a small adsorbed water concentration and a large measurement error.

As illustrated in Fig. 5, when the concentrations of the hydroxyl group and adsorbed water on a surface of the titanium dioxide electrode layer (porous metal oxide semiconductor layer) are controlled such that the ratio α is 0.11 or more and 0.45 or less, a dye sensitization solar cell having photoelectric conversion efficiency equal to or higher than 3% and also a method for manufacturing the dye sensitization solar cell can be provided.

Further, when the concentrations of the hydroxyl group and adsorbed water on a surface of the titanium dioxide electrode layer (porous metal oxide semiconductor layer) are controlled such that the ratio α is 0.11 or more and 0.40 or less, a dye sensitization solar cell having photoelectric conversion efficiency equal to or higher than 5% and also a method for manufacturing the dye sensitization solar cell can be provided.

Still further, when the concentrations of the hydroxyl group and adsorbed water on a surface of the titanium dioxide electrode layer (porous metal oxide semiconductor layer) are controlled such that the ratio α is 0.11 or more and 0.35 or less, a dye sensitization solar cell having photoelectric conversion efficiency equal to or higher than 7% and also a method for manufacturing the dye sensitization solar cell can be provided.

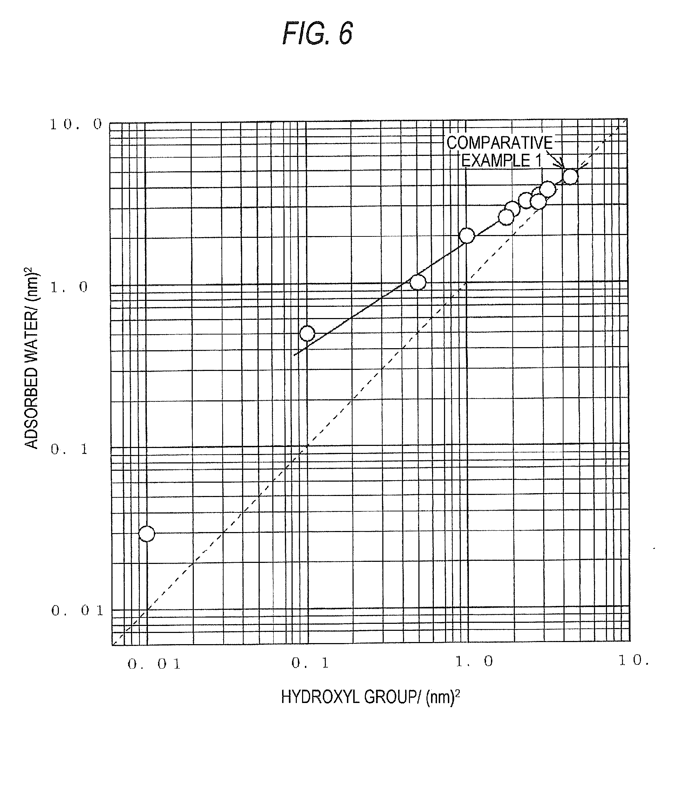

Fig. 6 is a drawing for explaining the relation between the concentration of the hydroxyl group and the concentration of the adsorbed water on a surface of the titanium dioxide layer of the Examples of the invention. In Fig. 6, the horizontal axis represents the concentration of hydroxyl group (groups/(nm)²) and the vertical axis represents the concentration of adsorbed water (pieces/(nm)²).

As illustrated in Fig. 6, the hydroxyl group concentration and the adsorbed water concentration on a surface of the titanium dioxide layer have approximately linear relation, indicating that the adsorbed water concentration increases in accordance with an increase in the hydroxyl group concentration on a surface of the titanium dioxide layer. Further, in Fig. 6, the result corresponding to Example 6 is outside the illustrated curve, as it has small concentrations of hydroxyl group and adsorbed water and a large measurement error.

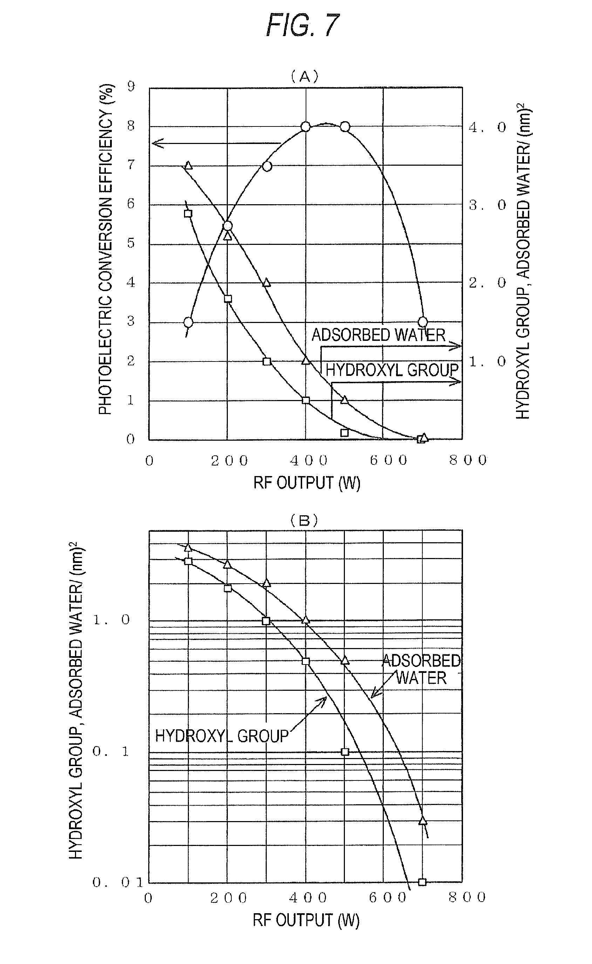

Fig. 7 is a drawing in which the results of Fig. 3 are illustrated as a graph, explaining the relation between RF output (plasma power) according to plasma treatment of the titanium dioxide layer and photoelectric conversion efficiency and the relation among the RF output and the concentration of hydroxyl group and the concentration of adsorbed water on a surface of the titanium dioxide layer as described in the Examples of the invention. Specifically, Fig. 7(A) is a linear plot for representing the relation among the RF output, the photoelectric conversion efficiency, the concentration of hydroxyl group, and the concentration of adsorbed water according to the plasma treatment and Fig. 7(B) is a semi-log plot for representing the relation among the RF output according to the plasma treatment, the concentration of hydroxyl group, and the concentration of adsorbed water.

In Fig. 7(A), the horizontal axis represents RF output according to the plasma treatment, the left vertical axis represents the photoelectric conversion efficiency (%), and the right vertical axis represents the concentrations of hydroxyl group and adsorbed water (pieces/(nm)²). In Fig. 7(B), the horizontal axis represents the RF output according to the plasma treatment, the left vertical axis represents the concentrations of hydroxyl group and adsorbed water (pieces/(nm)²).

As illustrated in Fig. 7(A) and Fig. 7(B), the concentrations of both the hydroxyl group and adsorbed water on a surface of the titanium dioxide layer decrease in accordance with the increase in RF output, and as the RF output according to the plasma treatment increases, the photoelectric conversion efficiency is increased to the maximum and then starts to decrease. These results suggest that the concentration of hydroxyl group and adsorbed water can be controlled according to the progress of evaporation or dehydration condensation of adsorbed water on a surface of the porous metal oxide semiconductor layer (titanium dioxide layer) by controlling the RF output according to a plasma treatment, and therefore it becomes possible to enhance the photoelectric conversion efficiency of a dye sensitization solar cell.

As illustrated in Fig. 7(A), when the plasma power (RF output) for the plasma treatment is controlled to 100 W to 700 W, a photoelectric conversion device having photoelectric conversion efficiency equal to or higher than 3% and also a method for manufacturing the device can be provided.

Further, when the plasma power (RF output) according to the plasma treatment is controlled to 180 W to 660 W, a photoelectric conversion device having photoelectric conversion efficiency equal to or higher than 5% and also a method for manufacturing the device can be provided.

Still further, when the plasma power (RF output) according to the plasma treatment is controlled to 300 W to 580 W, a photoelectric conversion device having photoelectric conversion efficiency equal to or higher than 7% and also a method for manufacturing the device can be provided.

As it is evident from the results illustrated in Fig. 3 to Fig. 7, Comparative Example 1 has higher concentrations of hydroxyl group and adsorbed water than any of the Examples, while it has low photoelectric conversion efficiency. Thus, it is clearly shown that, the concentrations of the hydroxyl group and adsorbed water on a surface of the porous metal oxide semiconductor layer (titanium dioxide layer) are one of the most important factors for determining the photoelectric conversion efficiency of a photoelectric conversion device (dye sensitization solar cell).

In this regard, it is believed that the amount (number of molecules) of the dye which is bonded and supported onto a surface of the porous metal oxide semiconductor layer is greatly affected by the concentrations of the hydroxyl group and adsorbed water on a surface of the porous metal oxide semiconductor layer and the amount (number of molecules) of supported dye and the state of dye supported on the surface have a huge influence on the photoelectric conversion efficiency of a photoelectric conversion device (dye sensitization solar cell).

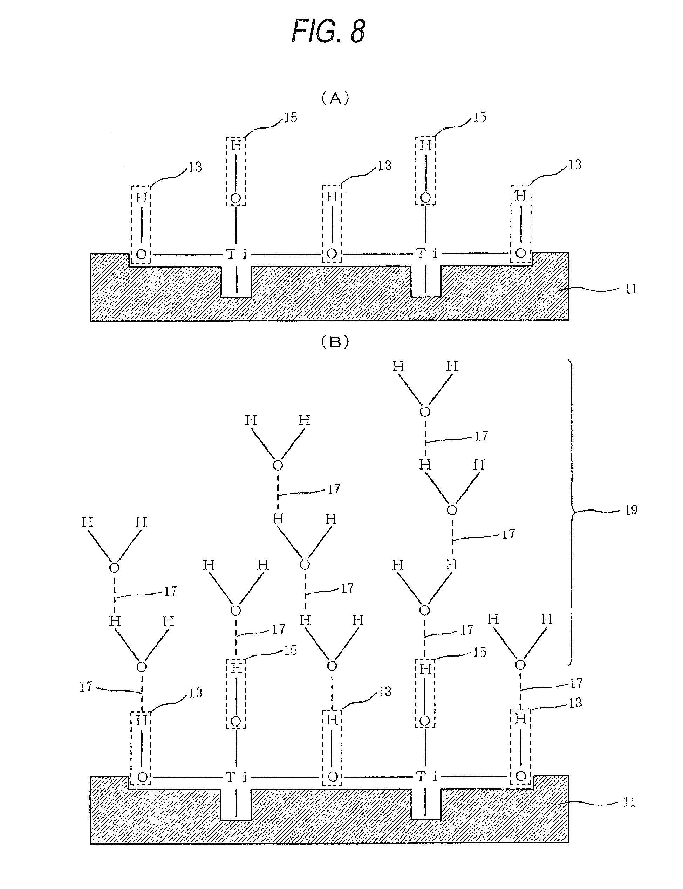

Fig. 8 is a drawing for explaining the adsorption of hydroxyl group and adsorbed water on a surface of the titanium dioxide layer of the Examples of the invention. Specifically, Fig. 8(A) diagrammatically represents adsorption of the hydroxyl group on a surface of the titanium dioxide layer and Fig. 8(B) diagrammatically represents adsorption of the hydroxyl group and adsorbed water on a surface of the titanium dioxide layer.

As illustrated in Fig. 8(A), it is believed that the hydroxyl groups (chemically adsorbed water) including terminal hydroxyl group (i.e., hydroxyl group (-OH) bound to titanium atom) 15 and the bridge hydroxyl group (i.e., hydroxyl group (-OH) bound to adjacent two titanium atoms) 13 are present on a surface of the titanium dioxide layer 11. Further, as illustrated in Fig. 8(B), it is believed that water (physically adsorbed water) is adsorbed to the hydroxyl groups via hydrogen bond.

As illustrated in Fig. 8(B), water molecules bind to the hydroxyl group 13 and 15 on a surface of the titanium dioxide layer 11 via hydrogen bond 17, yielding the water molecule layer (physically adsorbed layer) 19 prepared by physical adsorption. As a type of hydrogen bond, the hydrogen bond between the hydrogen (H) atom in Ti-OH and the oxygen (O) atom in water molecule H₂O (that is, first type), and the hydrogen bond between the oxygen (O) atom in Ti-OH and the hydrogen (H) atom in water molecule H₂O (that is, second type) can be considered. However, only the first type is illustrated in Fig. 8(B).

Generally, in order for the photosensitizing dye used for a dye sensitization solar cell to have an activity of binding and adsorbing of a dye onto a surface of a porous metal oxide semiconductor layer, and to form a bond between porous metal oxide semiconductor layer for promoting electron transfer between the dye excited by light illumination and conduction band of a porous oxide semiconductor layer, it contains an interlock group such as a carboxyl group, an alkoxy group, a hydroxyl group, a hydroxyalkyl group, a sulfonic acid group, an ester group, a mercapto group, and a phosphonyl group in the molecular structure of a dye.

In accordance with a binding reaction between a hydroxyl group on a surface of a porous metal oxide semiconductor layer such as a titanium dioxide layer and an interlock group of a dye, stable binding and adsorption onto a surface of the porous metal oxide semiconductor layer are achieved. For such reasons, the hydroxyl group concentration on a surface of the porous metal oxide semiconductor layer is an important parameter which determines the adsorption amount of a photosensitizing dye. Since the adsorption amount of a photosensitizing dye increases as the hydroxyl group concentration on a surface of the porous metal oxide semiconductor layer is increased, the number of electrons that are generated as a result of excitation of an adsorbed photosensitizing dye by light (sunlight) illumination increases, and thus photoelectric conversion efficiency of the dye sensitization solar cell is improved.

However, when the hydroxyl group concentration on a surface of the porous metal oxide semiconductor layer is excessively high, multi-molecular adsorption of the photosensitizing dye onto a surface of the porous metal oxide semiconductor layer occurs. Even when only one photosensitizing dye among multi-molecularly adsorbed molecules is excited to generate electrons, they are absorbed by other photosensitizing dye of the multi-molecularly adsorbed molecules, and as a result, it cannot reach the photosensitizing dye which is adsorbed on a site at which electrons can efficiently move in the porous metal oxide semiconductor layer. Consequently, it cannot efficiently contribute to generation of electromotive force.

Further, when the hydroxyl group concentration on a surface of the porous metal oxide semiconductor layer increases, hydrophilicity is improved, and as a result, water molecules bind to the hydroxyl group via hydrogen bond and, prepared by physical adsorption, physically adsorbed water layer is formed to have increased concentration of adsorbed water which is physically adsorbed as illustrated in Fig. 8(B). Since the photosensitizing dye can bind to adsorbed water of the physically adsorbed layer via hydrogen bond, multi-molecular adsorption of the photosensitizing dye is promoted more as the adsorbed water concentration on the surface increases.

Even when the photosensitizing dye which binds to the physically adsorbed water via hydrogen bond is excited by light illumination to generate electrons, they move toward the porous metal oxide semiconductor layer through the physically adsorbed layer, and thus it cannot efficiently contribute to generation of electromotive force.

According to the invention, hydroxyl group concentration on a surface of the porous metal oxide semiconductor layer to which the photosensitizing dye of a single-molecular layer is supported is controlled to the concentration range in which the electrons excited and generated from the photosensitizing dye by light illumination can move efficiently toward the porous metal oxide semiconductor layer and can efficiently contribute to generation of an electromotive force.

As described before, evaporation or dehydration condensation of adsorbed water on a surface of the porous metal oxide semiconductor layer can be promoted by plasma treatment of a surface of the porous metal oxide semiconductor layer, and therefore the hydroxyl group concentration on a surface of the porous metal oxide semiconductor layer can be controlled to a desired range according to plasma condition or the like required for the plasma treatment. In addition, it is desirable to figure out in advance the relations between the hydroxyl group concentration on a surface of the porous metal oxide semiconductor layer and the plasma condition or the like required for the plasma treatment.

Next, examples of thermal desorption spectrum will be described.

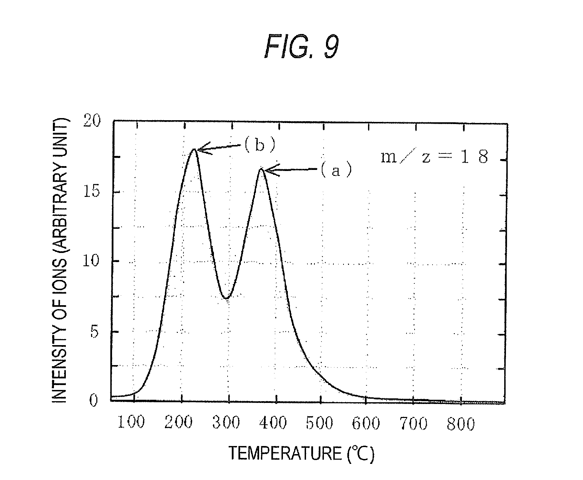

Fig. 9 is a diagram for explaining an example of the thermal desorption spectrum for mass charge ratio m/z = 18 as described in Example 1 of the invention. In Fig. 9, the horizontal axis indicates the temperature (°C) and the vertical axis represents intensity of ions (arbitrary unit) for m/z = 18.

According to the example illustrated in Fig. 9, the thermal desorption spectrum exhibits a bimodal curve. After separating the bimodal curve into two curves, that is, curve (a) and curve (b), area strength is obtained for each curve. It is believed that the curve (b) is based on ionization of water, which is desorbed from adsorbed water bonded to a titanium oxide layer based on hydrogen bond 17 as described before in view of Fig. 8, and according to the quantification method described before, the concentration of adsorbed water is quantitatively obtained. It is also believed that the curve (a) is based on ionization of water, which is desorbed from a titanium oxide layer based on dehydration condensation of (2Ti-OH → Ti-OH + H₂O) hydroxyl group (-OH) 13 and 15 which bind to Ti atom as illustrated in Fig. 8, and water concentration is quantitatively obtained by the quantification method described before and the result is converted into the concentration of hydroxyl group.

As described above, according to the invention, the concentration of hydroxyl group and the concentration of adsorbed water on a surface of the porous metal oxide semiconductor layer are controlled to enhance the photoelectric conversion efficiency of a photoelectric conversion device such as a dye sensitization solar cell. Accordingly, the amount of dye which is supported and bind to a surface of the porous metal oxide semiconductor layer can be controlled and the energy generated by light illumination can be utilized to maximum level as an electromotive force. As a result, the porous metal oxide semiconductor layer of the present invention has better characteristics than a porous metal oxide semiconductor layer which is formed by coating and calcination of a solution containing dispersion of metal oxide semiconductor particles.

While the aspects of the present invention have been described above, the invention is not limited to them. Instead, it should be understood that various modifications can be made based on the technical idea of the invention.

### INDUSTRIAL APPLICABILITY

According to the invention, a photoelectric conversion device having high conversion efficiency and a method for manufacturing the same can be provided.

### REFERENCE SIGNS LIST

- 1: Transparent substrate
- 2: Transparent electrode
- 3: Porous metal oxide semiconductor layer supported with photosensitizing dye
- 4: Electrolyte layer
- 5: Counter electrode
- 5a: Platinum layer
- 5b: Transparent conductor layer
- 6: Counter substrate
- 10: Dye sensitization photoelectric conversion device
- 11: Titanium dioxide layer
- 13: Bridge hydroxyl group
- 15: Terminal hydroxyl group
- 17: Hydrogen bond
- 19: Layer of water molecules prepared by physical adsorption

## Claims

1. A photoelectric conversion device comprising:
a working electrode on which a porous metal oxide semiconductor layer is formed to support a dye,
wherein a concentration of hydroxyl group on a surface of the porous metal oxide semiconductor layer is 0.01 groups/(nm)² or more and 4.0 groups/(nm)² or less.

2. The photoelectric conversion device according to claim 1, wherein the concentration of hydroxyl group is 0.01 groups/(nm)² or more and 3.0 groups/(nm)² or less.

3. The photoelectric conversion device according to claim 1, wherein the concentration of hydroxyl group is 0.02 groups/(nm)² or more and 2.0 groups/(nm)² or less.

4. The photoelectric conversion device according to claim 1, wherein the concentration of hydroxyl group is 0.05 groups/(nm)² or more and 0.9 groups/(nm)² or less.

5. The photoelectric conversion device according to claim 1, wherein the concentration of adsorbed water on the surface of the porous metal oxide semiconductor layer is 0.03 pieces/(nm)² or more and 4.0 pieces/(nm)² or less.

6. The photoelectric conversion device according to claim 1, wherein the concentration of adsorbed water is 0.03 pieces/(nm)² or more and 3.5 pieces/(nm)² or less.

7. The photoelectric conversion device according to claim 1, wherein the concentration of adsorbed water is 0.07 pieces/(nm)² or more and 2.5 pieces/(nm)² or less.

8. The photoelectric conversion device according to claim 1, wherein the concentration of adsorbed water is 0.2 pieces/(nm)² or more and 2.0 pieces/(nm)² or less.

9. A method for manufacturing a photoelectric conversion device, the method comprising:
a first step of forming a porous metal oxide semiconductor layer on a surface of a working electrode;
a second step of controlling a concentration of hydroxyl group on a surface of the porous metal oxide semiconductor layer to be 0.01 groups/(nm)² or more and 4.0 groups/(nm)² or less; and
a third step of supporting a dye in the porous metal oxide semiconductor layer.

10. The method for manufacturing a photoelectric conversion device according to claim 9, wherein the concentration of hydroxyl group is controlled to be 0.01 groups/(nm)² or more and 3.0 groups/(nm)² or less.

11. The method for manufacturing a photoelectric conversion device according to claim 9, wherein the concentration of hydroxyl group is controlled to be 0.02 groups/(nm)² or more and 2.0 groups/(nm)² or less.

12. The method for manufacturing a photoelectric conversion device according to claim 9, wherein the concentration of hydroxyl group is controlled to be 0.05 groups/(nm)² or more and 0.9 groups/(nm)² or less.

13. The method for manufacturing a photoelectric conversion device according to claim 9, wherein the concentration of adsorbed water on the surface of the porous metal oxide semiconductor layer is controlled to be 0.05 pieces/(nm)² or more and 4.0 pieces/(nm)² or less in the second step.

14. The method for manufacturing a photoelectric conversion device according to claim 9, wherein the concentration of adsorbed water is controlled to be 0.03 pieces/(nm)² or more and 3.5 pieces/(nm)² or less.

15. The method for manufacturing a photoelectric conversion device according to claim 9, wherein the concentration of adsorbed water is controlled to be 0.07 pieces/(nm)² or more and 2.5 pieces/(nm)² or less.

16. The method for manufacturing a photoelectric conversion device according to claim 9, wherein the concentration of adsorbed water is controlled to be 0.2 pieces/(nm)² or more and 2.0 pieces/(nm)² or less.

17. The method for manufacturing a photoelectric conversion device according to claim 9, wherein the concentration of hydroxyl group is controlled by performing, in the second step, at least one of a plasma treatment, a UV irradiation treatment, and a heat treatment on the surface of the porous metal oxide semiconductor layer.

18. The method for manufacturing a photoelectric conversion device according to claim 17, wherein the plasma treatment is performed under an oxidizing atmosphere.

19. The method for manufacturing a photoelectric conversion device according to claim 17, wherein the plasma treatment is performed by using one of parallel plate plasma, barrel plasma, microwave plasma, ECR plasma, helicon wave plasma, hollow cathode discharge plasma, surface wave plasma, and arc jet plasma.
